(19) **Europäisches Patentamt / European Patent Office / Office européen des brevets**

(11) **EP 4 529 313 A1**

(12) **EUROPEAN PATENT APPLICATION**
published in accordance with Art. 153(4) EPC

(43) Date of publication:
**26.03.2025   Bulletin 2025/13**

(21) Application number: **23806738.3**

(22) Date of filing: **05.05.2023**

(51) International Patent Classification (IPC):
**H04W 72/04** (2023.01)   **H04W 74/08** (2024.01)

(52) Cooperative Patent Classification (CPC):
**H04L 1/00; H04W 72/04; H04W 72/0446;**
**H04W 72/0453; H04W 74/08**

(86) International application number:
**PCT/CN2023/092354**

(87) International publication number:
**WO 2023/221786 (23.11.2023 Gazette 2023/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **19.05.2022   CN 202210554119**

(71) Applicant: **Datang Mobile Communications**
**Equipment Co., Ltd.**
**Beijing 100085 (CN)**

(72) Inventors:
• **ZHANG, Yujie**
**Beijing 100085 (CN)**
• **YE, Xijin**
**Beijing 100085 (CN)**

(74) Representative: **Cabinet Nony**
**11 rue Saint-Georges**
**75009 Paris (FR)**

(54) **DATA TRANSMISSION METHOD, TERMINAL, BASE STATION AND STORAGE MEDIUM**

(57)     Disclosed in the present application are a data transmission method, a terminal, a base station and a storage medium, which are used for solving the problem of poor PRACH performance of a novel multiple access technology in the prior art. The method includes: determining a bit sequence associated with PUSCH data to be sent; obtaining a first sub-bit sequence and a second sub-bit sequence from the bit sequence according to a first sequence division rule, where the first sequence division rule is a rule for dividing the bit sequence into two portions; determining, from a candidate preamble sequence set, a preamble sequence used during access based on the first sub-bit sequence; determining, from a resource set used for transmitting the preamble sequence, a resource required for sending the preamble sequence used during access based on the second sub-bit sequence; sending, on the resource required by the preamble sequence used during access, the preamble sequence used during access; and sending the PUSCH data.

Determining a bit sequence associated with PUSCH data to be sent; and obtaining a first sub-bit sequence and a second sub-bit sequence from the bit sequence according to a first sequence division rule; where the first sequence division rule is a rule for dividing the bit sequence into two portions — 401

Determining, from a candidate preamble sequence set, a preamble sequence used during access based on the first sub-bit sequence; and determining, from a resource set used for transmitting the preamble sequence, a resource required for sending the preamble sequence used during access based on the second sub-bit sequence — 402

Sending, on the resource required by the preamble sequence used during access, the preamble sequence used during access — 403

Sending the PUSCH data — 404

FIG. 4

**Description**

**CROSS-REFERENCE TO RELATED APPLICATIONS**

This application claims priority to Chinese Patent Application No. 202210554119.8, entitled "DATA TRANSMISSION METHOD, TERMINAL, BASE STATION AND STORAGE MEDIUM" and filed with the China Patent Office on May 19, 2022, the entire contents of which are incorporated herein by reference.

**TECHNICAL FIELD**

The present application relates to the field of communications, and in particular, to a data transmission method, a terminal, a base station, and a storage medium.

**BACKGROUND**

With the rapid development of mobile communication technologies, the number of terminals accessing a mobile communication network is increasing exponentially. In the future, the number of terminals accessing a mobile network per square kilometer may reach tens of millions.
Such massive terminals may have access difficulties when accessing the mobile network. Even if the access is successful, the problem of insufficient resources is likely to rise. For example, in the prior art, terminals typically access the mobile network by contention access. However, such massive terminals may be limited by coordination signaling resources of the network during the initial access and cannot access the mobile network by using an ordinary contention access technology, resulting in access difficulties. Assuming that massive terminals have accessed the mobile network, even if each terminal occupies one physical resource block (PRB) to freely generate data, tens of thousands of terminals require tens of thousands of PRBs or even more, which is far greater than a total number of PRBS in the mobile network. As a result, it is difficult for the terminals to obtain sufficient resources for data transmission.
In the prior art, a large number of terminals are allowed to access the network by using a novel multiple access technology (also referred to as an uncoordinated random access and transmission technology). The novel multiple access technology allows an access process to be performed together with a data sending process, rather than waiting until the access is successful before data is sent. This requires a physical random access channel (PRACH) to be associated with a physical uplink shared channel (PUSCH). That is, the PRACH is required to carry data information related to the PUSCH (such as a cyclic redundancy check (CRC) check bit of the PUSCH). Therefore, performance of the PUSCH is affected by performance of the PRACH. The PUSCH can only be solved when the PRACH is solved correctly, which requires that the performance of the PRACH is much better than that of the PUSCH.
In view of this, how to improve the performance of the PRACH of the novel multiple access technology has become an urgent technical problem.

**SUMMARY**

The present application provides a data transmission method, a terminal, a base station and a storage medium, which are used for solving the problem of poor PRACH performance of the novel multiple access technology in the prior art.
In a first aspect, in order to solve the above technical problems, a technical solution of a data transmission method according to embodiments of the present application is as follows:

determining a bit sequence associated with PUSCH data to be sent; and obtaining a first sub-bit sequence and a second sub-bit sequence from the bit sequence according to a first sequence division rule, where the first sequence division rule is a rule for dividing the bit sequence into two portions;
determining, from a candidate preamble sequence set, a preamble sequence used during access based on the first sub-bit sequence; and determining, from a resource set used for transmitting the preamble sequence, a resource required for sending the preamble sequence used during access based on the second sub-bit sequence;
sending, on the resource required by the preamble sequence used during access, the preamble sequence used during access; and
sending the PUSCH data.

In a possible implementation, determining the bit sequence associated with the PUSCH data to be sent includes:

obtaining, from the PUSCH data, at least one sequence of a sequence corresponding to a CRC check bit, a sequence corresponding to a terminal identifier, or a sequence corresponding to a feature bit in the PUSCH data; and

taking the at least one sequence as the bit sequence associated with the PUSCH data.

In a possible implementation, the feature bit includes:

first N bits in the PUSCH data;
last N bits in the PUSCH data; or
N bits determined from the PUSCH data according to a preset rule;
wherein N is a positive integer.

In a possible implementation, the first sequence division rule includes:
dividing the bit sequence into two portions, each of which is a continuous or discontinuous sequence.
In a possible implementation, positions of the two portions, each of which is a continuous or discontinuous sequence, in the bit sequence do not overlap or partially overlap.
In a possible implementation, determining, from the candidate preamble sequence set, the preamble sequence used during access based on the first sub-bit sequence includes:

converting the first sub-bit sequence into a first decimal number; and
selecting, from the candidate preamble sequence set, a candidate preamble sequence corresponding to the first decimal number as the preamble sequence used during access.

In a possible implementation, selecting, from the candidate preamble sequence set, the candidate preamble sequence corresponding to the first decimal number as the preamble sequence used during access includes:
selecting, from the candidate preamble sequence set, an $i^{th}$ candidate preamble sequence as the preamble sequence used during access; wherein i is the first decimal number, or i is determined based on the first decimal number and a total number of elements included in the candidate preamble sequence set.
In a possible implementation, the resource set includes at least one of time domain resources or frequency domain resources used for sending the preamble sequence.
In a possible implementation, when each bit in the second sub-bit sequence is associated with one resource in the resource set, determining, from the resource set used for transmitting the preamble sequence, the resource required for sending the preamble sequence used during access based on the second sub-bit sequence includes:

determining whether a binary value of each bit in the second sub-bit sequence is a preset value; wherein the preset value is binary data 0 or 1; and
if the binary value is the preset value, taking the resource associated with the corresponding bit in the resource set as the resource required by the preamble sequence used during access.

In a possible implementation, when a plurality of bit sequences with a same length as the second sub-bit sequence are in one-to-one correspondence to the resources in the resource set, determining, from the resource set used for transmitting the preamble sequence, the resource required for sending the preamble sequence used during access based on the second sub-bit sequence includes:

converting the second sub-bit sequence into a second decimal number; and
selecting, from the resource set, a $j^{th}$ resource as the resource required by the preamble sequence used during access; wherein j is the second decimal number, or j is determined based on the second decimal number and a total number of resources included in the resource set.

In a possible implementation, when the resource set includes a plurality of time-frequency resources used for sending the preamble sequence, determining, from the resource set used for transmitting the preamble sequence, the resource required for sending the preamble sequence used during access based on the second sub-bit sequence includes:

obtaining, according to a second sequence division rule, a third sub-bit sequence and a fourth sub-bit sequence from the second sub-bit sequence; wherein the second sequence division rule is a rule for dividing the second sub-bit sequence into two portions;
determining a first time domain resource from a time domain resource set corresponding to the resource set according to the third sub-bit sequence; and determining a first frequency domain resource from a frequency domain resource set corresponding to the resource set according to the fourth sub-bit sequence; and
taking a time-frequency resource corresponding to the first time domain resource and the first frequency domain resource as the resource required by the preamble sequence used during access.

In a possible implementation, when bits in the third sub-bit sequence are in one-to-one correspondence to time domain resources in the time domain resource set, determining the first time domain resource from the time domain resource set corresponding to the resource set according to the third sub-bit sequence includes:

determining whether a binary value of each bit in the third sub-bit sequence is a preset value; wherein the preset value is binary data 0 or 1; and
if the binary value is the preset value, taking a time domain resource associated with the corresponding bit in the time domain resource set as the first time domain resource.

In a possible implementation, when a plurality of bit sequences with a same length as the third sub-bit sequence are in one-to-one correspondence to time domain resources in the time domain resource set, determining the first frequency domain resource from the time domain resource set corresponding to the resource set according to the third sub-bit sequence includes:

converting the third sub-bit sequence into a third decimal number; and
selecting, from the time domain resource set, an $x^{th}$ time domain resource as the first time domain resource; wherein x is the third decimal number, or x is determined based on the third decimal number and a total number of time domain resources included in the time domain resource set.

In a possible implementation, when bits in the fourth sub-bit sequence are in one-to-one correspondence to frequency domain resources in the frequency domain resource set, determining the first frequency domain resource from the frequency domain resource set corresponding to the resource set according to the fourth sub-bit sequence includes:

determining whether a binary value of each bit in the fourth sub-bit sequence is a preset value; wherein the preset value is binary data 0 or 1; and
if the binary value is the preset value, taking a frequency domain resource associated with the corresponding bit in the frequency domain resource set as the first frequency domain resource.

In a possible implementation, when a plurality of bit sequences with a same length as the fourth sub-bit sequence are in one-to-one correspondence to frequency domain resources in the frequency domain resource set, determining the first frequency domain resource from the frequency domain resource set corresponding to the resource set according to the fourth sub-bit sequence includes:

converting the fourth sub-bit sequence into a fourth decimal number; and
selecting, from the frequency domain resource set, a $y^{th}$ frequency domain resource as the first frequency domain resource; wherein y is the fourth decimal number, or y is determined based on the fourth decimal number and a total number of frequency domain resources included in the frequency domain resource set.

In a second aspect, the embodiments of the present application provide a data transmission method, including:

receiving a preamble sequence and PUSCH data;
determining a first sub-bit sequence according to index data of the received preamble sequence in a candidate preamble sequence set; and determining a second sub-bit sequence according to position data of a resource carrying the preamble sequence in a resource set;
after it is determined that the preamble sequence is correct, merging the first sub-bit sequence and the second sub-bit sequence into a sequence based on a first sequence division rule to obtain a bit sequence associated with the PUSCH data; wherein the first sequence division rule is a rule for dividing the bit sequence into two portions; and
performing a receiving processing on the PUSCH data by using the bit sequence associated with the PUSCH data, the receiving processing including descrambling and/or checking the PUSCH data.

In a possible implementation, determining the first sub-bit sequence according to the index data of the received preamble sequence in the candidate preamble sequence set includes:

converting the index data of the received preamble sequence in the candidate preamble sequence set into binary data, and taking the binary data as the first sub-bit sequence; wherein the index data of the received preamble sequence in the candidate preamble sequence set is a decimal number; or

determining the first sub-bit sequence according to the index data of the received preamble sequence in the candidate preamble sequence set and a total number of elements included in the candidate sequence set.

In a possible implementation, the resource set includes at least one of time domain resources or frequency domain resources used for sending the preamble sequence.

In a possible implementation, when bits in the second sub-bit sequence are in one-to-one correspondence to the resources in the resource set, determining the second sub-bit sequence according to position data of the resource carrying the preamble sequence in a resource set includes:

constructing an initial sequence based on whether each of a plurality of continuous resources carries the preamble sequence; wherein when the preamble sequence is received on the resource, a value of the corresponding bit in the initial sequence is set to a preset value, when the preamble sequence is not received on the resource, the value of the corresponding bit in the initial sequence is set to an inverse value of the preset value, and the preset value is 0 or 1; and constructing at least one sequence including the initial sequence and having a same length as the second sub-bit sequence, and taking the at least one sequence constructed as the second sub-bit sequence.

In a possible implementation, when a plurality of bit sequences with a same length as the second sub-bit sequence are in one-to-one correspondence to the resources in the resource set, determining the second sub-bit sequence according to position data of the resource carrying the preamble sequence in a resource set includes:

converting the position data of the resource carrying the preamble sequence in the resource set into binary data, and taking the binary data as the second sub-bit sequence; wherein the position data of the resource carrying the preamble sequence in the resource set is a decimal number; or determining the second sub-bit sequence according to the position data of the resource carrying the preamble sequence in the resource set and a total number of elements included in the resource set.

In a possible implementation, when the resource set includes a plurality of time-frequency resources used for sending the preamble sequence, determining the second sub-bit sequence according to the position data of the resource carrying the preamble sequence in the resource set includes:

determining a third sub-bit sequence according to position data of a time domain resource corresponding to a time-frequency resource carrying the preamble sequence in a time domain resource set; determining a fourth sub-bit sequence according to position data of a frequency domain resource corresponding to a time-frequency resource carrying the preamble sequence in a frequency domain resource set; and merging the third sub-bit sequence and the fourth sub-bit sequence into the second sub-bit sequence according to a second sequence division rule; wherein the second sequence division rule is a rule for dividing the second sub-bit sequence into two portions.

In a possible implementation, determining the third sub-bit sequence according to the position data of the time domain resource corresponding to the time-frequency resource and carrying the preamble sequence in the time domain resource set includes:

converting the position data of the time domain resource carrying the preamble sequence in the time domain resource set into binary data, and taking the binary data as the third sub-bit sequence; wherein the position data of the time domain resource carrying the preamble sequence in the time domain resource set is a decimal number; or determining the third sub-bit sequence according to the position data of the time domain resource carrying the preamble sequence in the time domain resource set and a total number of elements included in the time domain resource set.

In a possible implementation, determining the fourth sub-bit sequence according to the position data of the frequency domain resource carrying the preamble sequence in the frequency domain resource set includes:

converting the position data of the frequency domain resource carrying the preamble sequence in the frequency domain resource set into binary data, and taking the binary data as the fourth sub-bit sequence; wherein the position data of the frequency domain resource carrying the preamble sequence in the frequency domain resource set is a decimal number; or determining the fourth sub-bit sequence according to the position data of the frequency domain resource carrying the preamble sequence in the frequency domain resource set and a total number of elements included in the frequency domain resource set.

In a third aspect, the embodiments of the present application further provide a terminal, including a memory, a transceiver, and a processor.

The memory is configured to store a computer program; the transceiver is configured to transmit and receive data under the control of the processor; and the processor is configured to read the computer program in the memory and perform the following operations:

determining a bit sequence associated with PUSCH data to be sent; and obtaining a first sub-bit sequence and a second sub-bit sequence from the bit sequence according to a first sequence division rule, where the first sequence division rule is a rule for dividing the bit sequence into two portions;
determining, from a candidate preamble sequence set, a preamble sequence used during access based on the first sub-bit sequence; and determining, from a resource set used for transmitting the preamble sequence, a resource required for sending the preamble sequence used during access based on the second sub-bit sequence;
sending, on the resource required by the preamble sequence used during access, the preamble sequence used during access; and
sending the PUSCH data.

In a possible implementation, the processor is further configured to:

obtain, from the PUSCH data, at least one sequence of a sequence corresponding to a CRC check bit, a sequence corresponding to a terminal identifier, or a sequence corresponding to a feature bit in the PUSCH data; and
take the at least one sequence as the bit sequence associated with the PUSCH data.

In a possible implementation, the feature bit includes:

first N bits in the PUSCH data;
last N bits in the PUSCH data; or
N bits determined from the PUSCH data according to a preset rule;
wherein N is a positive integer.

In a possible implementation, the first sequence division rule includes:
dividing the bit sequence into two portions, each of which is a continuous or discontinuous sequence.
In a possible implementation, positions of the two portions, each of which is a continuous or discontinuous sequence, in the bit sequence do not overlap or partially overlap.
In a possible implementation, the processor is further configured to:

convert the first sub-bit sequence into a first decimal number; and
select, from the candidate preamble sequence set, a candidate preamble sequence corresponding to the first decimal number as the preamble sequence used during access.

In a possible implementation, the processor is further configured to:
select, from the candidate preamble sequence set, an $i^{th}$ candidate preamble sequence as the preamble sequence used during access; wherein i is the first decimal number, or i is determined based on the first decimal number and a total number of elements included in the candidate preamble sequence set.
In a possible implementation, the resource set includes at least one of time domain resources or frequency domain resources used for sending the preamble sequence.
In a possible implementation, when each bit in the second sub-bit sequence is associated with one resource in the resource set, the processor is further configured to:

determine whether a binary value of each bit in the second sub-bit sequence is a preset value; wherein the preset value is binary data 0 or 1; and
if the binary value is the preset value, take the resource associated with the corresponding bit in the resource set as the resource required by the preamble sequence used during access.

In a possible implementation, when a plurality of bit sequences with a same length as the second sub-bit sequence are in one-to-one correspondence to the resources in the resource set, the processor is further configured to:

convert the second sub-bit sequence into a second decimal number; and
select, from the resource set, a j^th resource as the resource required by the preamble sequence used during access; wherein j is the second decimal number, or j is determined based on the second decimal number and a total number of resources included in the resource set.

In a possible implementation, when the resource set includes a plurality of time-frequency resources used for sending the preamble sequence, the processor is further configured to:

obtain, according to a second sequence division rule, a third sub-bit sequence and a fourth sub-bit sequence from the second sub-bit sequence; wherein the second sequence division rule is a rule for dividing the second sub-bit sequence into two portions;
determine a first time domain resource from a time domain resource set corresponding to the resource set according to the third sub-bit sequence; and determine a first frequency domain resource from a frequency domain resource set corresponding to the resource set according to the fourth sub-bit sequence; and
take a time-frequency resource corresponding to the first time domain resource and the first frequency domain resource as the resource required by the preamble sequence used during access.

In a possible implementation, when bits in the third sub-bit sequence are in one-to-one correspondence to time domain resources in the time domain resource set, the processor is further configured to:

determine whether a binary value of each bit in the third sub-bit sequence is a preset value; wherein the preset value is binary data 0 or 1; and
if the binary value is the preset value, take a time domain resource associated with the corresponding bit in the time domain resource set as the first time domain resource.

In a possible implementation, when a plurality of bit sequences with a same length as the third sub-bit sequence are in one-to-one correspondence to time domain resources in the time domain resource set, the processor is further configured to:

convert the third sub-bit sequence into a third decimal number; and
select, from the time domain resource set, an x^th time domain resource as the first time domain resource; wherein x is the third decimal number, or x is determined based on the third decimal number and a total number of time domain resources included in the time domain resource set.

In a possible implementation, when bits in the fourth sub-bit sequence are in one-to-one correspondence to frequency domain resources in the frequency domain resource set, the processor is further configured to:

determine whether a binary value of each bit in the fourth sub-bit sequence is a preset value; wherein the preset value is binary data 0 or 1; and
if the binary value is the preset value, take a frequency domain resource associated with the corresponding bit in the frequency domain resource set as the first frequency domain resource.

In a possible implementation, when a plurality of bit sequences with a same length as the fourth sub-bit sequence are in one-to-one correspondence to frequency domain resources in the frequency domain resource set, the processor is further configured to:

convert the fourth sub-bit sequence into a fourth decimal number; and
select, from the frequency domain resource set, a y^th frequency domain resource as the first frequency domain resource; wherein y is the fourth decimal number, or y is determined based on the fourth decimal number and a total number of frequency domain resources included in the frequency domain resource set.

In a fourth aspect, the embodiments of the present application further provide a base station, including a memory, a transceiver, and a processor.

The memory is configured to store a computer program; the transceiver is configured to transmit and receive data under the control of the processor; and the processor is configured to read the computer program in the memory and perform the following operations:

receiving a preamble sequence and PUSCH data;

determining a first sub-bit sequence according to index data of the received preamble sequence in a candidate preamble sequence set; and determining a second sub-bit sequence according to position data of a resource carrying the preamble sequence in a resource set;

after it is determined that the preamble sequence is correct, merging the first sub-bit sequence and the second sub-bit sequence into a sequence based on a first sequence division rule to obtain a bit sequence associated with the PUSCH data; the first sequence division rule being a rule for dividing the bit sequence into two portions; and

performing a receiving processing on the PUSCH data by using the bit sequence associated with the PUSCH data, the receiving processing including descrambling and/or checking the PUSCH data.

In a possible implementation, the processor is further configured to:

convert the index data of the received preamble sequence in the candidate preamble sequence set into binary data, and take the binary data as the first sub-bit sequence; wherein the index data of the received preamble sequence in the candidate preamble sequence set is a decimal number; or

determine the first sub-bit sequence according to the index data of the received preamble sequence in the candidate preamble sequence set and a total number of elements included in the candidate sequence set.

In a possible implementation, the resource set includes at least one of time domain resources or frequency domain resources used for sending the preamble sequence.

In a possible implementation, when bits in the second sub-bit sequence are in one-to-one correspondence to the resources in the resource set, the processor is further configured to:

construct an initial sequence based on whether each of a plurality of continuous resources carries the preamble sequence; wherein when the preamble sequence is received on the resource, a value of the corresponding bit in the initial sequence is set to a preset value, when the preamble sequence is not received on the resource, the value of the corresponding bit in the initial sequence is set to an inverse value of the preset value, and the preset value is 0 or 1; and

construct at least one sequence including the initial sequence and having a same length as the second sub-bit sequence, and take the at least one sequence constructed as the second sub-bit sequence.

In a possible implementation, when a plurality of bit sequences with a same length as the second sub-bit sequence are in one-to-one correspondence to the resources in the resource set, the processor is further configured to:

convert the position data of the resource carrying the preamble sequence in the resource set into binary data, and take the binary data as the second sub-bit sequence; wherein the position data of the resource carrying the preamble sequence in the resource set is a decimal number; or

determine the second sub-bit sequence according to the position data of the resource carrying the preamble sequence in the resource set and a total number of elements included in the resource set.

In a possible implementation, when the resource set includes a plurality of time-frequency resources used for sending the preamble sequence, the processor is further configured to:

determine a third sub-bit sequence according to position data of a time domain resource corresponding to a time-frequency resource carrying the preamble sequence in a time domain resource set;

determine a fourth sub-bit sequence according to position data of a frequency domain resource corresponding to a time-frequency resource carrying the preamble sequence in a frequency domain resource set; and

merge the third sub-bit sequence and the fourth sub-bit sequence into the second sub-bit sequence according to a second sequence division rule; wherein the second sequence division rule is a rule for dividing the second sub-bit sequence into two portions.

In a possible implementation, the processor is further configured to:

convert the position data of the time domain resource carrying the preamble sequence in the time domain resource set into binary data, and take the binary data as the third sub-bit sequence; wherein the position data of the time domain resource carrying the preamble sequence in the time domain resource set is a decimal number; or

determine the third sub-bit sequence according to the position data of the time domain resource carrying the preamble sequence in the time domain resource set and a total number of elements included in the time domain resource set.

In a possible implementation, the processor is further configured to:

convert the position data of the frequency domain resource carrying the preamble sequence in the frequency domain resource set into binary data, and take the binary data as the fourth sub-bit sequence; wherein the position data of the frequency domain resource carrying the preamble sequence in the frequency domain resource set is a decimal number; or

determine the fourth sub-bit sequence according to the position data of the frequency domain resource carrying the preamble sequence in the frequency domain resource set and a total number of elements included in the frequency domain resource set.

In a fifth aspect, the embodiments of the present application provide a terminal, including:

a division unit configured to determine a bit sequence associated with PUSCH data to be sent; and obtain a first sub-bit sequence and a second sub-bit sequence from the bit sequence according to a first sequence division rule, where the first sequence division rule is a rule for dividing the bit sequence into two portions;

a determination unit configured to, determine, from a candidate preamble sequence set, a preamble sequence used during access based on the first sub-bit sequence; and determine, from a resource set used for transmitting the preamble sequence, a resource required for sending the preamble sequence used during access based on the second sub-bit sequence;

a first sending unit configured to send, on the resource required by the preamble sequence used during access, the preamble sequence used during access; and

a second sending unit configured to send the PUSCH data.

In a possible implementation, the division unit is further configured to:

obtain, from the PUSCH data, at least one sequence of a sequence corresponding to a CRC check bit, a sequence corresponding to a terminal identifier, or a sequence corresponding to a feature bit in the PUSCH data; and take the at least one sequence as the bit sequence associated with the PUSCH data.

In a possible implementation, the feature bit includes:

first N bits in the PUSCH data;
last N bits in the PUSCH data; or
N bits determined from the PUSCH data according to a preset rule;
where N is a positive integer.

In a possible implementation, the first sequence division rule includes:
dividing the bit sequence into two portions, each of which is a continuous or discontinuous sequence.
In a possible implementation, positions of the two portions, each of which is a continuous or discontinuous sequence, in the bit sequence do not overlap or partially overlap.
In a possible implementation, the determination unit is further configured to:

convert the first sub-bit sequence into a first decimal number; and
select, from the candidate preamble sequence set, a candidate preamble sequence corresponding to the first decimal number as the preamble sequence used during access.

In a possible implementation, the determination unit is further configured to:
select, from the candidate preamble sequence set, an $i^{th}$ candidate preamble sequence as the preamble sequence used during access; wherein i is the first decimal number, or i is determined based on the first decimal number and a total number of elements included in the candidate preamble sequence set.
In a possible implementation, the resource set includes at least one of time domain resources or frequency domain resources used for sending the preamble sequence.
In a possible implementation, when each bit in the second sub-bit sequence is associated with one resource in the resource set, the determination unit is further configured to:

determine whether a binary value of each bit in the second sub-bit sequence is a preset value; wherein the preset value is binary data 0 or 1; and
if the binary value is the preset value, take the resource associated with the corresponding bit in the resource set as the resource required by the preamble sequence used during access.

In a possible implementation, when a plurality of bit sequences with a same length as the second sub-bit sequence are in one-to-one correspondence to the resources in the resource set, the determination unit is further configured to:

convert the second sub-bit sequence into a second decimal number; and
select, from the resource set, a $j^{th}$ resource as the resource required by the preamble sequence used during access; wherein j is the second decimal number, or j is determined based on the second decimal number and a total number of resources included in the resource set.

In a possible implementation, when the resource set includes a plurality of time-frequency resources used for sending the preamble sequence, the determination unit is further configured to:

obtain, according to a second sequence division rule, a third sub-bit sequence and a fourth sub-bit sequence from the second sub-bit sequence; wherein the second sequence division rule is a rule for dividing the second sub-bit sequence into two portions;
determine a first time domain resource from a time domain resource set corresponding to the resource set according to the third sub-bit sequence; and determine a first frequency domain resource from a frequency domain resource set corresponding to the resource set according to the fourth sub-bit sequence; and
take a time-frequency resource corresponding to the first time domain resource and the first frequency domain resource as the resource required by the preamble sequence used during access.

In a possible implementation, when bits in the third sub-bit sequence are in one-to-one correspondence to time domain resources in the time domain resource set, the determination unit is further configured to:

determine whether a binary value of each bit in the third sub-bit sequence is a preset value; wherein the preset value is binary data 0 or 1; and
if the binary value is the preset value, take a time domain resource associated with the corresponding bit in the time domain resource set as the first time domain resource.

In a possible implementation, when a plurality of bit sequences with a same length as the third sub-bit sequence are in one-to-one correspondence to time domain resources in the time domain resource set, the determination unit is further configured to:

convert the third sub-bit sequence into a third decimal number; and
select, from the time domain resource set, an $x^{th}$ time domain resource as the first time domain resource; wherein x is the third decimal number, or x is determined based on the third decimal number and a total number of time domain resources included in the time domain resource set.

In a possible implementation, when bits in the fourth sub-bit sequence are in one-to-one correspondence to frequency domain resources in the frequency domain resource set, the determination unit is further configured to:

determine whether a binary value of each bit in the fourth sub-bit sequence is a preset value; wherein the preset value is binary data 0 or 1; and
if the binary value is the preset value, take a frequency domain resource associated with the corresponding bit in the frequency domain resource set as the first frequency domain resource.

In a possible implementation, when a plurality of bit sequences with a same length as the fourth sub-bit sequence are in one-to-one correspondence to frequency domain resources in the frequency domain resource set, the determination unit is further configured to:

convert the fourth sub-bit sequence into a fourth decimal number; and
select, from the frequency domain resource set, a $y^{th}$ frequency domain resource as the first frequency domain resource; wherein y is the fourth decimal number, or y is determined based on the fourth decimal number and a total number of frequency domain resources included in the frequency domain resource set.

In a sixth aspect, the embodiments of the present application provide a base station, including:

a receiving unit configured to receive a preamble sequence and PUSCH data;

a determination unit configured to determine a first sub-bit sequence according to index data of the received preamble sequence in a candidate preamble sequence set; and determine a second sub-bit sequence according to position data of a resource carrying the preamble sequence in a resource set;

a merging unit configured to, after it is determined that the preamble sequence is correct, merge the first sub-bit sequence and the second sub-bit sequence into a sequence based on a first sequence division rule to obtain a bit sequence associated with the PUSCH data; the first sequence division rule being a rule for dividing the bit sequence into two portions; and

a processing unit configured to perform a receiving processing on the PUSCH data by using the bit sequence associated with the PUSCH data, the receiving processing including descrambling and/or checking the PUSCH data.

In a possible implementation, the determination unit is further configured to:

convert the index data of the received preamble sequence in the candidate preamble sequence set into binary data, and take the binary data as the first sub-bit sequence; wherein the index data of the received preamble sequence in the candidate preamble sequence set is a decimal number; or

determine the first sub-bit sequence according to the index data of the received preamble sequence in the candidate preamble sequence set and a total number of elements included in the candidate sequence set.

In a possible implementation, the resource set includes at least one of time domain resources or frequency domain resources used for sending the preamble sequence.

In a possible implementation, when bits in the second sub-bit sequence are in one-to-one correspondence to the resources in the resource set, the determination unit is further configured to:

construct an initial sequence based on whether each of a plurality of continuous resources carries the preamble sequence; wherein when the preamble sequence is received on the resource, a value of the corresponding bit in the initial sequence is set to a preset value, when the preamble sequence is not received on the resource, the value of the corresponding bit in the initial sequence is set to an inverse value of the preset value, and the preset value is 0 or 1; and

construct at least one sequence including the initial sequence and having a same length as the second sub-bit sequence, and take the at least one sequence constructed as the second sub-bit sequence.

In a possible implementation, when a plurality of bit sequences with a same length as the second sub-bit sequence are in one-to-one correspondence to the resources in the resource set, the determination unit is further configured to:

convert the position data of the resource carrying the preamble sequence in the resource set into binary data, and take the binary data as the second sub-bit sequence; wherein the position data of the resource carrying the preamble sequence in the resource set is a decimal number; or

determine the second sub-bit sequence according to the position data of the resource carrying the preamble sequence in the resource set and a total number of elements included in the resource set.

In a possible implementation, when the resource set includes a plurality of time-frequency resources used for sending the preamble sequence, the determination unit is further configured to:

determine a third sub-bit sequence according to position data of a time domain resource corresponding to a time-frequency resource carrying the preamble sequence in a time domain resource set;

determine a fourth sub-bit sequence according to position data of a frequency domain resource corresponding to a time-frequency resource carrying the preamble sequence in a frequency domain resource set; and

merge the third sub-bit sequence and the fourth sub-bit sequence into the second sub-bit sequence according to a second sequence division rule; wherein the second sequence division rule is a rule for dividing the second sub-bit sequence into two portions.

In a possible implementation, the determination unit is further configured to:

convert the position data of the time domain resource carrying the preamble sequence in the time domain resource set into binary data, and take the binary data as the third sub-bit sequence; wherein the position data of the time domain resource carrying the preamble sequence in the time domain resource set is a decimal number; or

determine the third sub-bit sequence according to the position data of the time domain resource carrying the preamble sequence in the time domain resource set and a total number of elements included in the time domain resource set.

In a possible implementation, the determination unit is further configured to:

convert the position data of the frequency domain resource carrying the preamble sequence in the frequency domain resource set into binary data, and take the binary data as the fourth sub-bit sequence; wherein the position data of the frequency domain resource carrying the preamble sequence in the frequency domain resource set is a decimal number; or

determine the fourth sub-bit sequence according to the position data of the frequency domain resource carrying the preamble sequence in the frequency domain resource set and a total number of elements included in the frequency domain resource set.

In a seventh aspect, the embodiments of the present application further provide a processor-readable storage medium, wherein the processor-readable storage medium stores a computer program, the computer program being used for causing the processor to perform the method as described in the first aspect or the second aspect.

Through the technical solutions in the above one or more embodiments of the embodiments of the present application, the embodiments of the present application achieve at least the following technical effects.

In the embodiments according to the present application, after a bit sequence associated with PUSCH data is determined, the bit sequence is divided into a first sub-bit sequence and a second sub-bit sequence according to a first sequence division rule; then a preamble sequence used during access is determined from a candidate preamble sequence set based on the first sub-bit sequence; and a resource required for sending the preamble sequence used during access is determined from a resource set used for transmitting the preamble sequence based on the second sub-bit sequence, and the preamble sequence used during access is sent on the resource required by the preamble sequence used during access; and the PUSCH data is sent. In this way, part of data information in the bit sequence associated with the PUSCH data can be carried by the resource sending the preamble sequence, thereby reducing information carried by the preamble sequence and reducing a number of sequences in the candidate preamble sequence set. Therefore, complexity of detection of the preamble sequence can be reduced, and a detection capability of the PRACH can be improved.

**BRIEF DESCRIPTION OF THE DRAWINGS**

FIG. 1 is a schematic diagram of four long PRACH preamble formats with a sequence length of 839;

FIG. 2 is a schematic diagram of PRACH preamble formats with a length of 139;

FIG. 3 is a block diagram showing a principle of an uncoordinated random access and transmission technology;

FIG. 4 is a flowchart of a data transmission method on a terminal side according to embodiments of the present application;

FIG. 5 is a schematic diagram of dividing a bit sequence associated with PUSCH data to be sent into two continuous sequences according to embodiments of the present application;

FIG. 6 is a schematic diagram of dividing a bit sequence associated with PUSCH data to be sent into two discontinuous sequences according to embodiments of the present application;

FIG. 7 is a schematic diagram of a time domain resource set according to embodiments of the present application;

FIG. 8 is a schematic diagram of a frequency domain resource set according to embodiments of the present application;

FIG. 9 is a schematic diagram of a time-frequency resource set used for sending a preamble sequence according to embodiments of the present application;

FIG. 10 is a schematic diagram of a resource set according to embodiments of the present application;

FIG. 11 is a flowchart of a data transmission method on a base station side according to embodiments of the present application;

FIG. 12 is a schematic diagram of merging of a first sub-bit sequence and a second sub-bit sequence according to embodiments of the present application;

FIG. 13 is a schematic structural diagram of a terminal according to embodiments of the present application;

FIG. 14 is a schematic structural diagram of a base station according to embodiments of the present application;

FIG. 15 is a schematic structural diagram of another terminal according to embodiments of the present application; and

FIG. 16 is a schematic structural diagram of another base station according to embodiments of the present application.

## DETAILED DESCRIPTION

In the embodiments of the present application, the term "and/or" describes an association relationship between associated objects and represents that three relationships may exist. For example, A and/or B may represent the following three cases: only A exists, both A and B exist, and only B exists. The character "/" generally indicates an "or" relationship between the associated objects.

In the embodiments of the present application, the term "a plurality of" means two or more, and other quantifiers are similar thereto.

The technical solutions in the embodiments of the present application will be described clearly and completely below with reference to the accompanying drawings in the embodiments of the present application. Apparently, the described embodiments are merely some of rather than all of the embodiments of the present application. All other embodiments obtained by those of ordinary skill in the art without creative efforts based on the embodiments of the present application shall fall within the protection scope of the present application.

The technical solutions in the embodiments of the present application are applicable to a variety of systems, especially 5G systems. For example, an applicable system may be a global system of mobile communication (GSM), a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, or the like. Each of these systems includes a terminal device and a network device. The system may further include a core network part, such as an evolved packet system (EPS) or a 5G system (5GS).

The terminal device as referred to in the embodiments of the present application may be a device that provides a user with voice and/or data connectivity, a handheld device with a wireless connection function, or other processing devices connected to a wireless modem. In different systems, the terminal device may have different names. For example, in the 5G system, the terminal device may be referred to as a user equipment (UE). A wireless terminal device may communicate with one or more core networks (CNs) over a radio access network (RAN). The wireless terminal device may be a mobile terminal device such as a mobile phone (also referred to as a "cellular" phone) and a computer with a mobile terminal device, including, for example, a portable mobile device, pocket-sized mobile device, handheld mobile device, computer built-in mobile device, or vehicle-mounted mobile device, which exchanges voice and/or data with the RAN. For example, the wireless terminal device may be a device such as a personal communication service (PCS) phone, a cordless phone, a session initiated protocol (SIP) phone set, a wireless local loop (WLL) station, or a personal digital assistant (PDA). The wireless terminal device may also be referred to as a system, a subscriber unit, a subscriber station, a mobile station, a mobile console, a remote station, an access point, a remote terminal, an access terminal, a user terminal, a user agent, or a user device, which is not limited in the embodiments of the present application.

The network device as referred to in the embodiments of the present application may be a base station. The base station may include a plurality of cells providing services for the terminal. Depending on different application scenarios, the base station may also be referred to as an access point, a device that communicates with the wireless terminal device over an air interface in an access network by using one or more sectors, or any other name. The network device may be configured to perform inter-conversion between a received air frame with an Internet protocol (IP) packet and serve as a router between the wireless terminal device and the rest of the access network. The rest of the access network may include an IP communication network. The network device may further coordinate attribute management on the air interface. For example, the network device as referred to in the embodiments of the present application may be a base transceiver station (BTS) in the GSM or CDMA system, a NodeB in the WCDMA system, an evolutional Node B (eNB, or e-NodeB) in the LTE system, a 5G base station (gNB) in 5G network architecture (next generation system), a home evolved Node B (HeNB), a relay node, a home base station (femto), a pico base station (pico), or the like, which is not limited in the embodiments of the present application. In some network structures, the network device may include a centralized unit (CU) node and a distributed unit (DU) node, which may be geographically separated from each other.

In order to enable those skilled in the art to fully understand this solution, before formal introduction to this solution, technologies related to this solution will be introduced as follows.

I. PRACH sending scheme in NR

NR supports four long random access preamble formats with a length of 839 and nine short preamble formats with a length of 139. Four long PRACH preamble formats with a sequence length of 839 are shown in Table 1.

Table 1

| Format | LRA | $\Delta F^{RA}$ | $N_u$ | $N_{CP}^{RA}$ | Supported restricted set | Application scenario |
|--------|-----|------|-------|-------|--------------------------|---------------------|
| 0 | 839 | 1.25 kHz | 24576 k | 3168 k | TypeA, TypeB | LTE spectrum reuse scenario |
| 1 | 839 | 1.25 kHz | 2×24576 k | 21024 k | TypeA, TypeB | Long-distance coverage, up to 100 km |
| 2 | 839 | 1.25 kHz | 4×24576 k | 4688 k | TypeA, TypeB | Enhanced coverage scenario |
| 3 | 839 | 5kHz | 4×6144 k | 3168 k | TypeA, TypeB | High-speed movement scenario |

Sub-carrier spaces (SCSs), time lengths, CP lengths, restricted sets, and application scenarios of the four preamble formats with a sequence length of 839 are shown in Table 1. $L_{RA}$ denotes a length of a preamble sequence, $\Delta f^{RA}$ denotes an SCS of the preamble sequence, $N_u$ denotes a duration of the preamble sequence, $N_{CP}^{RA}$ denotes a duration of a cyclic prefix (CP), $N_u$ and $N_{CP}^{RA}$ are in units of Tc, where Tc=1/($\Delta f_{max} \cdot N_f$), $\Delta f_{max}$ =480×10$^3$ H$_z$, N$_f$=4096, and k=T$_s$/T$_c$=64, where Ts=1/($\Delta f_{ref} \cdot N_{f,ref}$), $\Delta f_{ref}$=15×10$^3$ Hz, and N$_{f,ref}$=2048. Compared with the PRACH preamble format 0, the PRACH preamble format 1 has a longer CP and a longer duration, achieving a coverage of 100 km. The PRACH preamble format 3 uses a larger SCS to support the high-speed movement scenario. A guard time (GT) is not explicitly given in Table 1, but is implicit in the PRACH preamble format by aligning a time slot where the PRACH preamble is located with other time slots based on a boundary of 1 ms.

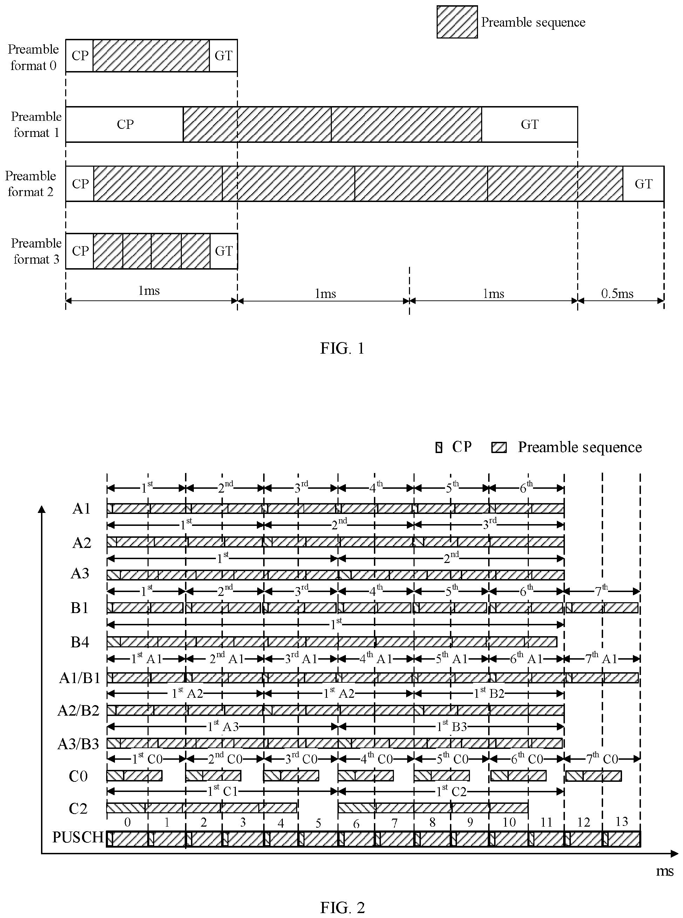

Referring to FIG. 1, which is a schematic diagram of four long PRACH preamble formats with a sequence length of 839, a preamble sequence included in the preamble format 0, the preamble format 1, the preamble format 2, and the preamble format 3 corresponds to an orthogonal frequency division multiplexing (OFDM) symbol. Two types of SCSs: 1.25 kHz and 5 kHz, are supported, which support two cyclic shift restricted sets: restriction type A and restriction type B, respectively. Maximum frequency shift ranges supported by the restriction type A and the restriction type B are SCS and 2SCS respectively. A set corresponding to the restriction type A is applied to ordinary mobile scenarios, and a corresponding Doppler frequency shift is within SCS. A set corresponding to the restriction type B is applied to ultra-high-speed scenarios, and a corresponding Doppler frequency shift ranges from SCS to 2SCS.

Table 2 is a table of nine short PRACH preamble formats with a sequence length of 139 ($\Delta f_{RA}$=15×2$^\mu$ kHz, u= {0,1,2,3}).

Table 2

| Format | LRA | $\Delta f^{RA}$ | $N_u$ | $N_{CP}^{RA}$ | Application scenario |
|--------|-----|------|-------|-------|---------------------|
| A1 | 139 | 15×2$^\mu$kHz | 2×2048k·2$^{-\mu}$ | 288k·2$^{-\mu}$ | Micro-cell |
| A2 | 139 | 15×2$^\mu$kHz | 4×2048k·2$^{-\mu}$ | 576k·2$^{-\mu}$ | Conventional cell |
| A3 | 139 | 15×2$^\mu$kHz | 6×2048k·2$^{-\mu}$ | 864k·2$^{-\mu}$ | Conventional cell |
| B1 | 139 | 15×2$^\mu$kHz | 2×2048k·2$^{-\mu}$ | 216k·2$^{-\mu}$ | Micro-cell |
| B2 | 139 | 15×2$^\mu$kHz | 4×2048k·2$^{-\mu}$ | 360k·2$^{-\mu}$ | Conventional cell |
| B3 | 139 | 15×2$^\mu$kHz | 6×2048k·2$^{-\mu}$ | 504k·2$^{-\mu}$ | Conventional cell |
| B4 | 139 | 15×2$^\mu$kHz | 12×2048k·2$^{-\mu}$ | 936k·2$^{-\mu}$ | Conventional cell |
| C0 | 139 | 15×2$^\mu$kHz | 2048k·2$^{-\mu}$ | 1240k·2$^{-\mu}$ | Conventional cell |
| C2 | 139 | 15×2$^\mu$kHz | 4×2048k·2$^{-\mu}$ | 2048k·2$^{-\mu}$ | Conventional cell |

The preamble sequences with a sequence length of 139 in Table 2 are used in a frequency band of 6 GHz and smaller cell coverage, and scenarios where the base station adopts multi-beam scanning. Four types of SCSs: 15 kHz, 30 kHz, 60 kHz, and 120 kHz, are supported. Since the SCSs are no less than 15 kHz, no restricted set is supported. Table 2 defines SCSs, CP lengths, sequence lengths, and application scenarios of nine independent preamble formats (A1, A2, A3, B1, B2, B3, B4, C0, and C2). Meanings of the parameters are the same as those in Table 1. In PRACH time-frequency resource configuration, in order to utilize time-frequency resources more efficiently and reduce signaling overhead, the preamble formats A1, A2, A3, B1, B4, C0, and C2 in Table 2 are configured and used separately, and B2 and B3 can only be used in combination with A2 and A3 to form A2/B2, A3/B3. B1 may be either configured and used separately or combined with A1 to form A1/B1. Therefore, for the preamble formats with a length of 139, a total of 10 system-configurable preamble formats are supported: A1, A2, A3, B1, B4, A1/B1, A2/B2, A3/B3, C0, and C2. According to a multiple relationship between 14 OFDM symbols included in one time slot and the number of OFDM symbols included in the preamble formats, the number of maximum random access channel occasions (ROs) of the preamble formats A1, A2, A3, B1, B4, A1/B1, A2/B2, A3/B3, C0, and C2 included in one time slot are 6, 3, 2, 7, 1, 7, 3, 2, 7, and 2, respectively. Taking the format A1/B1 as an example, A1 occupies the first 12 OFDM symbols of a time slot, and B1 occupies the last 2 OFDM symbols. FIG. 2 is a schematic diagram of a PRACH preamble format with a length of 139.

II. Uncoordinated random access and transmission technology

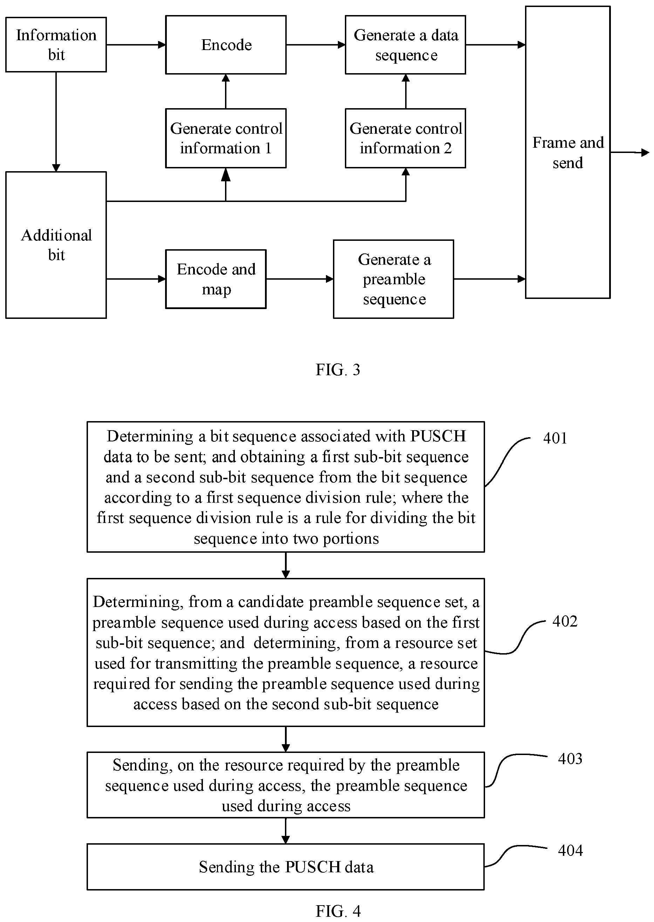

The uncoordinated random access and transmission technology is mainly featured with no network coordination and simultaneous implementation of a random access process and a multiple-access transmission process. "No network coordination" means that the network is not required to confirm access identity of the terminal and the network is not required to schedule transmission resources. FIG. 3 shows a schematic block diagram of an uncoordinated random access and transmission technology.

In FIG. 3, additional bits are generated from information bits, such as last A bits of the information bits, or CRC check bits of the information bits. The information bits may be user identity information and user data information.

The terminal generates additional bits according to the information bits, generates control information 1 and control information 2 according to the information bits, encodes the information bits by using the control information 1, generates a data sequence by using the control information 2 and the encoded information bits, encodes and maps the additional bits to generate a preamble sequence at the same time, and finally frames and sends the preamble sequence and the data sequence periodically, until reaching a maximum number of transmission of the data sequence, or receiving confirmation information fed back by the base station for indicating that the network has received the information bits correctly, or receiving a network broadcast information indicating to stop access and transmission.

The uncoordinated random access and transmission technology is integration and upgrade of a random access technology and a multiple access transmission technology. Initial access and data transmission are no longer regarded as two independent processes, but are merged into one process to support access and transmission of massive terminals, reduce a delay, and improve success rates of access and transmission.

The meaning of the uncoordinated random access and transmission technology is as follows:

(1) By jointly transmitting and processing user identity information and user data information, dynamic coordination on the network side is simplified, and the number of accessed users are effectively increased, which is suitable for access and transmission of massive terminals.

(2) By integrating the two processes of initial access and data transmission, a receiving end obtains the user identity information and the user data information at the same time, a transmission delay is reduced, which is suitable for burst transmission of small-packet data.

(3) Through an enhanced unequal diversity transmission technology, unequal diversity transmission can be achieved for different user sets, which effectively improves the success rates of access and transmission, and facilitates the access and transmission of high-priority user sets.

Currently, a 6G-oriented uncoordinated random access and transmission technology eliminates most coordination between terminals and networks and may support scenarios with massive terminals. However, in the uncoordinated random access and transmission technology, the PRACH is associated with the PUSCH, and the preamble sequence of the PRACH carries part of the data information of the PUSCH. The existing PRACH sending scheme in NR does not support this manner. If all associated PUSCH information is carried by using one preamble sequence, the number of elements required in a preamble sequence candidate set is very large, which may lead to poor detection performance of the PRACH.

In the prior art, in the uncoordinated random access and transmission technology, an access process and a data sending process are performed together, rather than waiting until the access is successful before data is sent. Therefore, performance of the PUSCH is affected by performance of the PRACH. The PUSCH can only be solved when the PRACH is solved correctly, which has a relatively high requirement for the performance of the PRACH, and the performance of the PRACH is required to be much better than that of the PUSCH. If the performance of the PRACH is poor, the performance of the PUSCH may be affected. Therefore, how to improve the performance of the PRACH in the uncoordinated random access and transmission technology is an urgent problem.

In order to solve the above problem, embodiments of the present application provide a data transmission method, a terminal, a base station, and a storage medium, which are used for solving the problem of poor PRACH performance of a novel multiple access technology in the prior art.

The method and the apparatus are based on the same application concept. Since the method and the apparatus solve the problem by similar principles, the implementation of the apparatus and the method can be referred to each other. Details are not repeated herein.

Referring to FIG. 4, embodiments of the present application provide a data transmission method applied to a terminal. A processing process of the method is as follows.

In step 401, a bit sequence associated with PUSCH data to be sent is determined; and a first sub-bit sequence and a second sub-bit sequence are obtained from the bit sequence according to a first sequence division rule; where the first sequence division rule is a rule for dividing the bit sequence into two portions.

The bit sequence associated with the PUSCH data may be any one or any combination of a PUSCH CRC check bit, a terminal identifier of a user terminal, or a feature bit in the PUSCH data.

In a possible implementation, determining the bit sequence associated with PUSCH data to be sent may be performed in the following manner:

obtaining, from the PUSCH data, at least one of a sequence corresponding to a CRC check bit, a sequence corresponding to a terminal identifier, or a sequence corresponding to a feature bit in the PUSCH data; and taking the at least one sequence as the bit sequence associated with the PUSCH data.

The feature bit in the PUSCH data may be first N bits in the PUSCH data, last N bits in the PUSCH data, or N bits determined from the PUSCH data according to a preset rule; where N is a positive integer.

If the bit sequence of the CRC check bit of the PUSCH data to be sent is 1101000001101010, the sequence of the CRC check bit may be obtained from the PUSCH data to be sent and taken as the bit sequence associated with the PUSCH data to be sent. Alternatively, if the sequence of the terminal identifier of the user terminal carried in the PUSCH data to be sent is 10000011010100, the sequence of the terminal identifier may be obtained from the PUSCH data to be sent and taken as the sequence associated with the PUSCH data to be sent. Alternatively, the sequence including the CRC check bit and the terminal identifier is obtained from the PUSCH data to be sent and taken as the bit sequence associated with the PUSCH data to be sent. Alternatively, the sequence corresponding to the feature bit (such as the first N bits or the last N bits) in the PUSCH data to be sent or the sequence corresponding to N bits determined from the PUSCH data to be sent according to a preset rule (such as a pattern for bit selection) is taken as the bit sequence associated with the PUSCH data to be sent.

After the bit sequence associated with the PUSCH data to be sent is determined, the first sub-bit sequence and the second sub-bit sequence may be obtained from the bit sequence associated with the PUSCH data to be sent according to the first sequence division rule.

The first sequence division rule includes: dividing the bit sequence into two portions, each of which is a continuous or discontinuous sequence. Positions of the two portions, each of which is a continuous or discontinuous sequence, in the bit sequence associated with the PUSCH data to be sent do not overlap or partially overlap. Lengths of the first sub-bit sequence and the second sub-bit sequence may be equal or unequal.

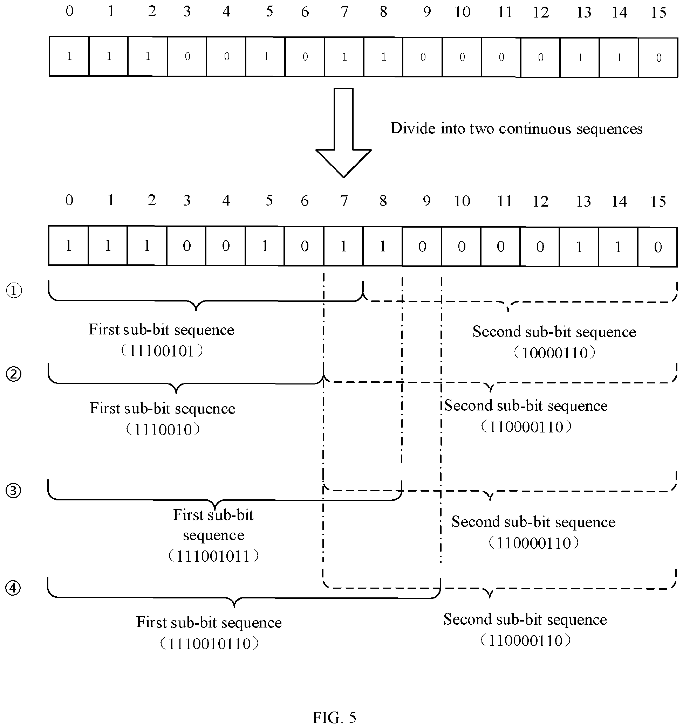

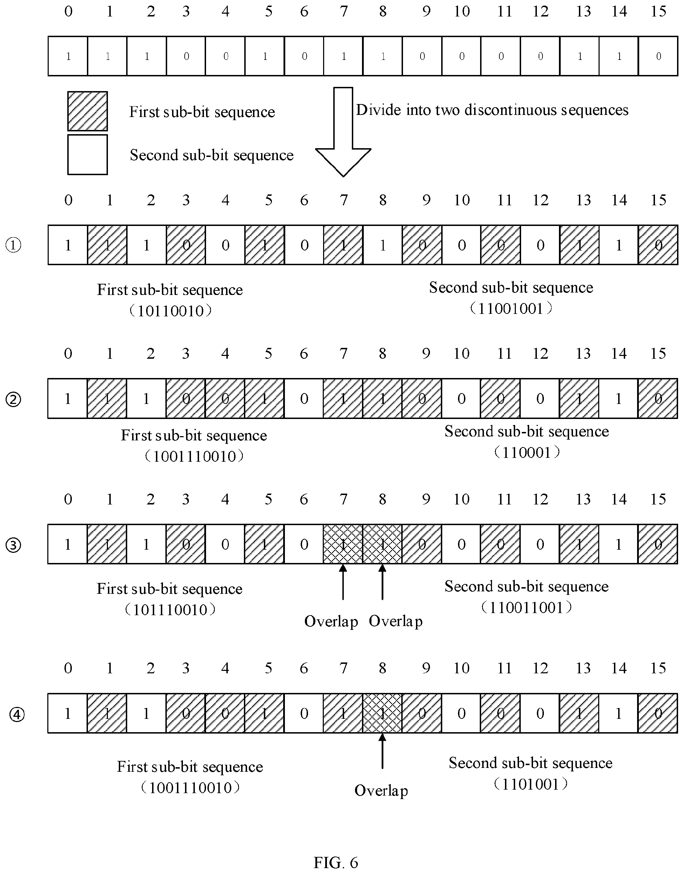

For example, referring to FIG. 5 and FIG. 6, FIG. 5 is a schematic diagram of dividing a bit sequence associated with PUSCH data to be sent into two continuous sequences according to embodiments of the present application, and FIG. 6 is a schematic diagram of dividing a bit sequence associated with PUSCH data to be sent into two discontinuous sequences according to embodiments of the present application. Assuming that the length of the bit sequence associated with the PUSCH data to be sent is 16, that is, there are 16 bits (0 to 15), the bit sequence associated with the PUSCH data to be sent is 1110010110000110.

If the first sequence division rule is to divide a bit sequence associated with PUSCH data to be sent into two continuous sequences, 1110010110000110 may be divided into two continuous sequences without overlap. As shown in ① in FIG 5, it is divided into a first sub-bit sequence (11100101) and a second sub-bit sequence (10000110) with an equal length, or as shown in ② in FIG 5, it is divided into a first sub-bit sequence (1110010) and a second sub-bit sequence (110000110) with unequal lengths. 1110010110000110 may be divided into two continuous sequences with overlap. As shown in ③ in FIG. 5, it is divided into a first sub-bit sequence (111001011) and a second sub-bit sequence (110000110) with an equal length, or as shown in ④ in FIG 5, it is divided into a first sub-bit sequence (1110010110) and a second sub-bit sequence (110000110) with an equal length.

If the first sequence division rule is to divide a bit sequence associated with PUSCH data to be sent into two discontinuous sequences, 1110010110000110 may be divided into two discontinuous sequences without overlap. As shown in ① in FIG 6, it is divided into a first sub-bit sequence (10110010) and a second sub-bit sequence (11001001) with an equal length, or as shown in ② in FIG 6, it is divided into a first sub-bit sequence (1001110010) and a second sub-bit sequence (110001) with unequal lengths. 1110010110000110 may be divided into two continuous sequences with overlap. As shown in ③ in FIG. 6, it is divided into a first sub-bit sequence (101110010) and a second sub-bit sequence (110011001) with an equal length, or as shown in ④ in FIG 6, it is divided into a first sub-bit sequence (1001110010) and a second sub-bit sequence (1101001) with an equal length.

Step 402 to step 404 may be performed after the first sub-bit sequence and the second sub-bit sequence are obtained.

In step 402, a preamble sequence used during access is determined from a candidate preamble sequence set based on the first sub-bit sequence; and a resource required for sending the preamble sequence used during access is determined from a resource set used for transmitting the preamble sequence based on the second sub-bit sequence.

In step 403, the preamble sequence used during access is sent on the resource required by the preamble sequence used during access.

In step 404, the PUSCH data is sent.

In step 402, sequences whose lengths are a length of the first sub-bit sequence are in one-to-one correspondence to candidate preambles in the candidate preamble sequence set.

Determining the preamble sequence used during access from the candidate preamble sequence set based on the first sub-bit sequence may be implemented in the following manner:

converting the first sub-bit sequence into a first decimal number; and selecting, from the candidate preamble sequence set, a candidate preamble sequence corresponding to the first decimal number as the preamble sequence used during access.

Selecting, from the candidate preamble sequence set, the candidate preamble sequence corresponding to the first decimal number as the preamble sequence used during access may be implemented in the following manner:

selecting, from the candidate preamble sequence set, an $i^{th}$ candidate preamble sequence as the preamble sequence used during access; where i is the first decimal number, or i is determined based on the first decimal number and a total number of elements included in the candidate preamble sequence set. Generally, the total number of elements included in the candidate preamble set is $2^a$, where a is the total number of bits (which is also the length of the first sub-bit sequence) included in the first sub-bit sequence.

When i is determined based on the first decimal number and the total number of elements included in the candidate preamble sequence set, i may be calculated by the following formula:

$$i = (k_1 + x_1) \bmod 2^a + y_1 \quad (1);$$

where $k_1$ denotes the first decimal number, a is the total number of bits included in the first sub-bit sequence, and $x_1$ and $y_1$ denote offset values and may be set to constants, which may be set to, for example, a constant 0, indicating that there is no offset. If $x_1$ is set to 1, it indicates that $k_1$ is offset by 1 (i.e., $k_1 + 1$). If $y_1$ is set to 2, it indicates that $(k_1 + 1) \bmod 2^a$ is offset by 2.

For example, it is assumed that the first sub-bit sequence is 00010011 (occupying 8 bits), there are $2^8$ (i.e., 256) sequences with a length of 8, and the total number of elements included in the candidate preamble set is $2^8$ (i.e., 256). That is, the candidate preamble set includes a candidate preamble sequence 1 to a candidate preamble sequence 256, which are in one-to-one correspondence to 256 sequences with a length of 8. 00010011 is converted into a decimal number 19 (i.e., the first decimal number), and the $19^{th}$ candidate preamble sequence (i.e., the candidate preamble sequence 19) in the candidate preamble set is selected as the preamble sequence used by the terminal during access.

Alternatively, i is determined according to Formula (1) (assuming that $x_1$ is 1 and $y_1$ is 0), and i is equal to 5 according to the formula (19+1) mod 256. That is, the $5^{th}$ candidate preamble sequence is selected from the candidate preamble sequence set as the preamble sequence used by the terminal during access.

In the embodiments provided in the present application, a resource set of the RACH used for transmitting the preamble sequence includes at least one of time domain resources or frequency domain resources used for sending the preamble sequence. Resources including the time domain resources and the frequency domain resources are referred to as time-frequency resources. The above time domain resources, frequency domain resources, and time-frequency resources used for sending the preamble sequence may all be referred to as transmission occasions (TOs) of the preamble sequence. One frequency domain resource may be one resource element (RE). A resource set consisting of the time domain resources used for sending the preamble sequence is referred to as a time domain resource set, a resource set consisting of the frequency domain resources used for sending the preamble sequence is referred to as a frequency domain resource set, and a resource set consisting of the time-frequency resources used for sending the preamble sequence is referred to as a time-frequency resource set.

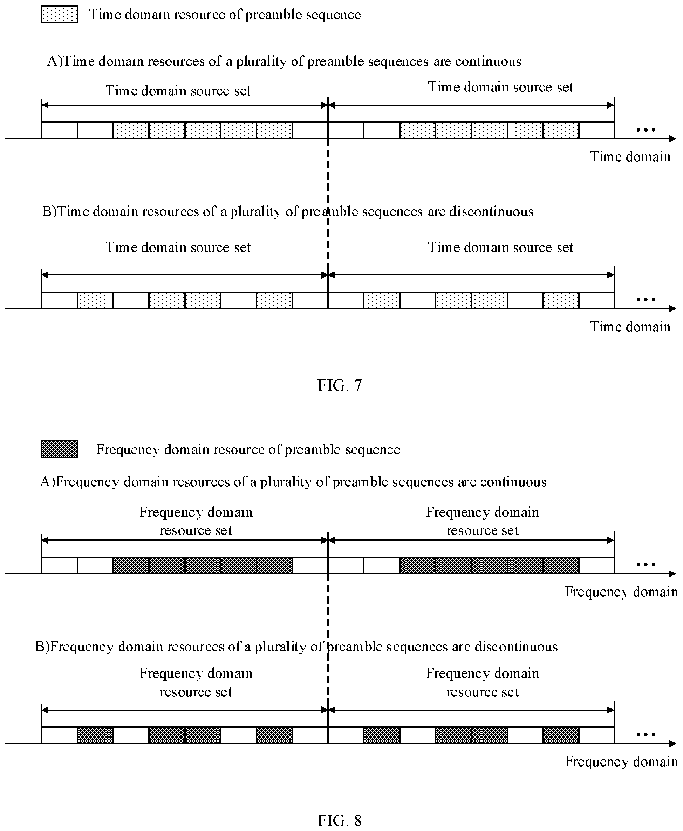

The time domain resource set may be in units of time slots, subframes, frames, etc. For example, a time domain resource set may be 1 frame, 1 time slot, 5 subframes, etc. Time domain resources corresponding to a plurality of preamble sequences in the time domain resource set may be continuous or discontinuous. Lengths of the time domain resources carrying the preamble sequences may be equal or unequal. FIG. 7 is a schematic diagram of a time domain resource set according to embodiments of the present application. In FIG. 7, graph A) shows that time domain resources of a plurality of preamble sequences are continuous, and time domain resources of a plurality of preamble sequences are discontinuous.

The frequency domain resource set may be in units of RBs, subcarriers, etc. For example, the frequency domain resource set may be 30 RBs, 1024 subcarriers, etc. Frequency domain resources corresponding to a plurality of preamble sequences in the frequency domain resource set may be continuous or discontinuous. Lengths of the frequency domain resources carrying the preamble sequences may be equal or unequal. FIG. 8 is a schematic diagram of a frequency domain resource set according to embodiments of the present application. In FIG. 8, graph A) shows that frequency domain resources of a plurality of preamble sequences are continuous, and frequency domain resources of a plurality of preamble sequences are discontinuous.

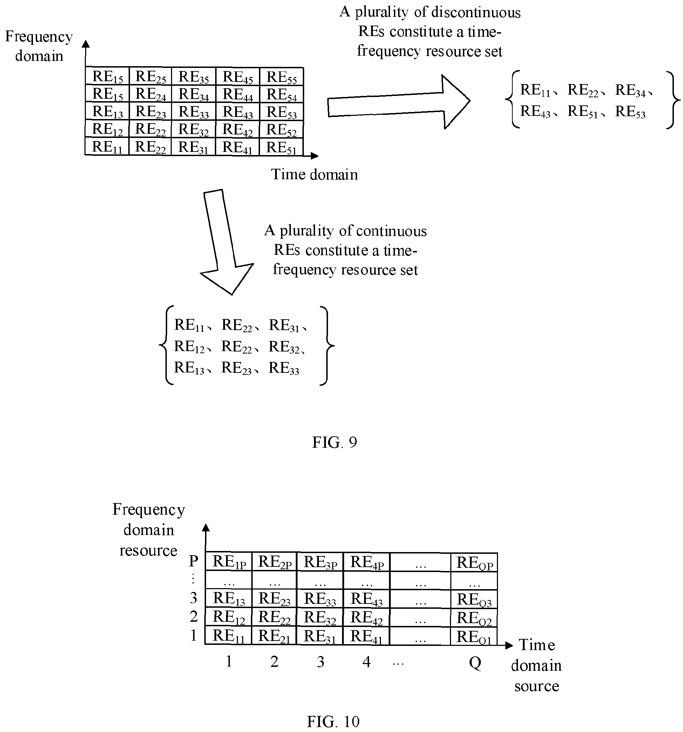

FIG. 9 is a schematic diagram of a time-frequency resource set used for sending a preamble sequence according to embodiments of the present application. FIG. 9 shows time-frequency resources $RE_{11}$ to $RE_{55}$. If $RE_{11}$, $RE_{22}$, $RE_{34}$, $RE_{43}$, $RE_{51}$, and $RE_{53}$ may be used for sending preambles, these discontinuous time-frequency resources constitute a time-frequency resource set. If $RE_{11}$, $RE_{22}$, $RE_{31}$, $RE_{12}$, $RE_{22}$, $RE_{32}$, $RE_{13}$, $RE_{23}$, and $RE_{33}$ may be used for sending preambles, these continuous time-frequency resources constitute a time-frequency resource set. The above time-frequency resources may be renumbered in the time-frequency resource set. For example, the time-frequency resources in the time-frequency resource set $\{RE_{11}, RE_{22}, RE_{34}, RE_{43}, RE_{51}, RE_{53}\}$ are sequentially numbered as 1 to 6, and the time-frequency resources in the time-frequency resource set $\{RE_{11}, RE_{22}, RE_{31}, RE_{12}, RE_{22}, RE_{32}, RE_{13}, RE_{23}, RE_{33}\}$ are sequentially numbered as 1 to 9.

In a possible implementation, when each bit in the second sub-bit sequence is associated with one resource in the resource set, determining the resource required for sending the preamble sequence used during access from the resource set used for transmitting the preamble sequence based on the second sub-bit sequence may be implemented in the following manner:

determining whether a binary value of each bit in the second sub-bit sequence is a preset value; where the preset value is binary data 0 or 1; and if the binary value is the preset value, taking the resource associated with the corresponding bit in the resource set as the resource required by the preamble sequence used during access.

For example, when each bit in the second sub-bit sequence is associated with one resource in the resource set (i.e., the bits in the second sub-bit sequence are in one-to-one correspondence to the resources in the resource set), if the second sub-bit sequence is 00101001, the total number of elements included in the resource set is 8.

If the above resource set is a time domain resource set, when the preset value is the binary data 1, it may be determined that binary values corresponding to the 3rd bit, the 5th bit, and the 8th bit in the second sub-bit sequence are all the preset value 1. Therefore, time domain resources respectively associated with the 3rd bit, the 5th bit, and the 8th bit in the second sub-bit sequence are selected from the time domain resource set to carry the preamble sequence used by the terminal during access (i.e., the preamble sequence is repeatedly sent 3 times). The preamble sequence used by the terminal during access is sent to the base station on the above 3 time-frequency resources respectively, and after the preamble sequence used during access is sent, the PUSCH data to be sent is sent to the base station. When the preset value is the binary data 0, it may be determined that binary values corresponding to the 1st bit, the 2nd bit, the 4th bit, the 6th bit, and the 7th bit in the second sub-bit sequence are all the preset value 0. Therefore, time domain resources respectively associated with the 1st bit, the 2nd bit, the 4th bit, the 6th bit, and the 7th bit in the second sub-bit sequence are selected from the time domain resource set to carry the preamble sequence used by the terminal during access (i.e., the preamble sequence is repeatedly sent 5 times). The preamble sequence used by the terminal during access is sent to the base station on the above 5 time-frequency resources respectively, and after the preamble sequence used during access is sent, the PUSCH data to be sent is sent to the base station.

If the above resource set is a frequency domain resource set, when the preset value is the binary data 1, it may be determined that binary values corresponding to the 3rd bit, the 5th bit, and the 8th bit in the second sub-bit sequence are all the preset value 1. Therefore, frequency domain resources respectively associated with the 3rd bit, the 5th bit, and the 8th bit in the second sub-bit sequence are selected from the frequency domain resource set to carry the preamble sequence used by the terminal during access (i.e., the preamble sequence is repeatedly sent 3 times). The preamble sequence used by the terminal during access is sent to the base station on the above 3 frequency domain resources respectively, and after the preamble sequence used during access is sent, the PUSCH data to be sent is sent to the base station. When the preset value is the binary data 0, it may be determined that binary values corresponding to the 1st bit, the 2nd bit, the 4th bit, the 6th bit, and the 7th bit in the second sub-bit sequence are all the preset value 0. Therefore, frequency domain resources respectively associated with the 1st bit, the 2nd bit, the 4th bit, the 6th bit, and the 7th bit in the second sub-bit sequence are selected from the frequency domain resource set to carry the preamble sequence used by the terminal during access (i.e., the preamble sequence is repeatedly sent 5 times). The preamble sequence used by the terminal during access is sent to the base station on the above 5 frequency domain resources respectively, and after the preamble sequence used during access is sent, the PUSCH data to be sent is sent to the base station.

If the above resource set is a time-frequency resource set, when the preset value is binary data 1, it may be determined that binary values corresponding to the 3rd bit, the 5th bit, and the 8th bit in the second sub-bit sequence are all the preset value 1. Therefore, time-frequency resources respectively associated with the 3rd bit, the 5th bit, and the 8th bit in the second sub-bit sequence are selected from the time-frequency resource set to carry the preamble sequence used by the terminal during access (i.e., the preamble sequence is repeatedly sent 3 times). The preamble sequence used by the terminal during access is sent to the base station on the above 3 time-frequency resources respectively, and after the preamble sequence used during access is sent, the PUSCH data to be sent is sent to the base station. When the preset value is binary data 0, it may be determined that binary values corresponding to the 1st bit, the 2nd bit, the 4th bit, the 6th bit, and the 7th bit in the second sub-bit sequence are all the preset value 0. Therefore, time-frequency resources respectively

associated with the 1st bit, the 2nd bit, the 4th bit, the 6th bit, and the 7th bit in the second sub-bit sequence are selected from the time-frequency resource set to carry the preamble sequence used by the terminal during access (i.e., the preamble sequence is repeatedly sent 5 times). The preamble sequence used by the terminal during access is sent to the base station on the above 5 time-frequency resources respectively, and after the preamble sequence used during access is sent, the PUSCH data to be sent is sent to the base station.

In a possible implementation, when a plurality of bit sequences with a same length as the second sub-bit sequence are in one-to-one correspondence to the resources in the resource set, determining the resource required for sending the preamble sequence used during access from the resource set used for transmitting the preamble sequence based on the second sub-bit sequence may be implemented in the following manner:

converting the second sub-bit sequence into a second decimal number; and selecting, from the resource set, a $j^{th}$ resource as the resource required by the preamble sequence used during access; where j is the second decimal number, or j is determined based on the second decimal number and a total number of resources included in the resource set.

When j is determined based on the second decimal number and the total number of elements included in the resource set, j may be calculated by the following formula:

$$j=(k_2+x_2)\bmod 2^b+y_2 \quad (2);$$

where $k_2$ denotes the second decimal number, b is the total number of bits included in the second sub-bit sequence, and $x_2$ and $y_2$ denote offset values and may be set to constants, which may be set to, for example, a constant 0, indicating that there is no offset. If $x_2$ is set to 1, it indicates that $k_2$ is offset by 1 (i.e., $k_2+1$). If $y_2$ is set to 2, it indicates that $(k_2+1)\bmod 2^b$ is offset by 2.

For example, when a plurality of bit sequences with a same length as the second sub-bit sequence are in one-to-one correspondence to the resources in the resource set, if the length of the second sub-bit sequence is 3, there are $2^3$ (i.e., 8) bit sequences ([000,001... 111]) with the same length (3) as the second sub-bit sequence. These 8 bit sequences are in one-to-one correspondence to 8 resources in the resource set.

If the resource set is a time domain resource set, 011 is converted into a decimal number to obtain a second decimal number 3, the 3rd time domain resource may be selected from the time domain resource set to carry the preamble sequence used by the terminal during access. The preamble sequence used by the terminal during access is sent to the base station on the 3rd time domain resource, and after the preamble sequence used during access is sent, the PUSCH data to be sent is sent to the base station. Alternatively, according to Formula (2) above, a time domain resource is determined from the time domain resource set to carry the preamble sequence used by the terminal during access. On the assumption that $x_2=2$ and $y_2=1$, it may be determined according to Formula (2) above that j is equal to 6 according to the formula (3+2)mod 8+1. The 6th time domain resource may be selected from the time domain resource set to carry the preamble sequence used by the terminal during access to the base station. The preamble sequence used by the terminal during access is sent on the 6th time domain resource, and after the preamble sequence used during access is sent, the PUSCH data to be sent is sent to the base station.

If the resource set is a frequency domain resource set, 011 is converted into a decimal number to obtain a second decimal number 3. The 3rd frequency domain resource may be selected from the frequency domain resource set to carry the preamble sequence used by the terminal during access. The preamble sequence used by the terminal during access is sent to the base station on the 3rd frequency domain resource, and after the preamble sequence used during access is sent, the PUSCH data to be sent is sent to the base station. Alternatively, according to Formula (2) above, a frequency domain resource is determined from the frequency domain resource set to carry the preamble sequence used by the terminal during access. On the assumption that $x_2=2$ and $y_2=1$, it may be determined according to Formula (2) above that j is equal to 6 according to the formula (3+2)mod 8+1. The 6th frequency domain resource may be selected from the frequency domain resource set to carry the preamble sequence used by the terminal during access. The preamble sequence used by the terminal during access is sent to the base station on the 6th frequency domain resource, and after the preamble sequence used during access is sent, the PUSCH data to be sent is sent to the base station.

If the resource set is a time-frequency resource set, 011 is converted into a decimal number to obtain a second decimal number 3, the 3rd time-frequency resource may be selected from the time-frequency resource set. The preamble sequence used by the terminal during access is sent to the base station on the 3rd time-frequency resource, and after the preamble sequence used during access is sent, the PUSCH data to be sent is sent to the base station. Alternatively, according to Formula (2) above, a TO of a time-frequency resource is determined from the time-frequency resource set to send the preamble sequence used by the terminal during access. On the assumption that $x_2=2$ and $y_2=1$, it may be determined according to Formula (2) above that j is equal to 6 according to the formula (3+2)mod 8+1. A TO of the 6th frequency domain resource may be selected from the time-frequency resource set to send the preamble sequence used by the terminal during access. The preamble sequence used by the terminal during access is sent to the base station on the 6th time-frequency resource, and after the preamble sequence used during access is sent, the PUSCH data to be sent is sent to the base station.

In a possible implementation, when the resource set includes a plurality of time-frequency resources used for sending the preamble sequence, determining the resource required for sending the preamble sequence of the PUSCH data from the resource set used for transmitting the preamble sequence based on the second sub-bit sequence may be implemented in the following manner:

obtaining, according to a second sequence division rule, a third sub-bit sequence and a fourth sub-bit sequence from the second sub-bit sequence, where the second sequence division rule is a rule for dividing the second sub-bit sequence into two portions; determining a first time domain resource from a time domain resource set corresponding to the resource set according to the third sub-bit sequence; and determining a first frequency domain resource from a frequency domain resource set corresponding to the resource set according to the fourth sub-bit sequence; and taking a time-frequency resource corresponding to the first time domain resource and the first frequency domain resource as the resource required by the preamble sequence used during access.

The above second sequence division rule is similar to the first sequence division rule, and a positional relationship between the third sub-bit sequence and the fourth sub-bit sequence obtained is similar to that between the first sub-bit sequence and the second sub-bit sequence, which are not repeated herein.

For example, referring to FIG. 10, which is a schematic diagram of a resource set according to embodiments of the present application, the resource set in FIG. 10 includes continuous time-frequency resources, a set including the time-frequency resources may be referred to as a time-frequency resource set (including $P \times Q$ time-frequency resources: $RE_{11}$ to $RE_{PQ}$), a corresponding time domain resource set includes a time domain resource 1 to a time domain resource Q, and a frequency domain resource set corresponding to the above time-frequency resource set includes a frequency domain resource 1 to a frequency domain resource P. It is assumed that the second sub-bit sequence is 00101001, and the second sequence division rule is to divide the second sub-bit sequence into two portions that are continuous, do not overlap, and have an equal length. In this way, it may be obtained that the third sub-bit sequence is 0010 and the fourth sub-bit sequence is 1001. According to the third sub-bit sequence 0010, the $2^{nd}$ time domain resource (i.e., the time domain resource 2) may be determined from the time domain resource set as the first time domain resource. According to the fourth sub-bit sequence 1001, the $9^{th}$ frequency domain resource (i.e., the frequency domain resource 9) may be determined from the frequency domain resources as the first frequency domain resource. Then, the time-frequency resource ($RE_{29}$) corresponding to the frequency domain resource 9 and the time domain resource 2 is taken as the resource required for the preamble sequence used by the terminal during access. In this way, the terminal can send the preamble sequence used during access to the base station on the time-frequency resource ($RE_{29}$), and after sending the preamble sequence used during access, send PUSCH data to the base station.

In a possible implementation, when bits in the third sub-bit sequence are in one-to-one correspondence to time domain resources in the time domain resource set, determining the first time domain resource from the time domain resource set corresponding to the resource set according to the third sub-bit sequence may be implemented in the following manner:

determining whether a binary value of each bit in the third sub-bit sequence is a preset value, where the preset value is the binary data 0 or 1; and if the binary value is the preset value, taking a time domain resource associated with the corresponding bit in the time domain resource set as the first time domain resource.

For example, the third sub-bit sequence is 0010, four bits of the third sub-bit sequence correspond to four time domain resources in the time domain resource set, and the preset value is 1. Then, only the binary data corresponding to the third bit is 1. Therefore, the time domain resource associated with the third bit in the time domain resource set may be taken as the first time domain resource.

In another example, the third sub-bit sequence is 0110, four bits of the third sub-bit sequence correspond to four time domain resources in the time domain resource set, and the preset value is 1. Then only the binary data corresponding to the second and third bits is 1. Therefore, the time domain resources associated with the second and third bits in the time domain resource set may be taken as first time domain resources (i.e., there are 2 first time domain resources).

In a possible implementation, when a plurality of bit sequences with a same length as the third sub-bit sequence are in one-to-one correspondence to time domain resources in the time domain resource set, determining the first time domain resource from the time domain resource set corresponding to the resource set according to the third sub-bit sequence may be implemented in the following manner:

converting the third sub-bit sequence into a third decimal number; and selecting, from the time domain resource set, an $x^{th}$ time domain resource as the first time domain resource; where x is the third decimal number, or x is determined based on the third decimal number and a total number of time domain resources included in the time domain resource set.

When x is determined based on the third decimal number and the total number of time domain resources included in the time domain resource set, x may be calculated according to the following formula:

$$j = (k_3 + x_3) \bmod 2^{b1} + y_3 \quad (3);$$

where $k_3$ denotes the third decimal number, b1 is the total number of bits included in the third sub-bit sequence, and $x_3$ and $y_3$ denote offset values and may be set to constants, which may be set to, for example, a constant 0, indicating that there is no offset. If $x_3$ is set to 1, it indicates that $k_3$ is offset by 1 (i.e., $k_3$+1). If $y_3$ is set to 2, it indicates that $(k_3+1) \bmod 2^{b1}$ is offset by 2.

For example, when a plurality of bit sequences with a same length as the third sub-bit sequence are in one-to-one correspondence to the time domain resources in the time domain resource set, if the third sub-bit sequence is 011, the length of the third sub-bit sequence is 3, and the bit sequences with the same length (3) as the third sub-bit sequence include 8 bit sequences [000,001...111], which may be in one-to-one correspondence to $2^3$ (i.e., 8) resources. If $x_3$=1 and $y_3$=0, x is equal to 2, calculated by (3+1) mod 8+0 according to Formula (3) above. That is, the 2nd time domain resource is selected from the time domain resource set corresponding to the resource set as the first time domain resource.

In a possible implementation, when bits in the fourth sub-bit sequence are in one-to-one correspondence to frequency domain resources in the frequency domain resource set, determining the first frequency domain resource from the frequency domain resource set corresponding to the resource set according to the fourth sub-bit sequence may be implemented in the following manner:

determining whether a binary value of each bit in the fourth sub-bit sequence is a preset value, where the preset value is binary data 0 or 1; and if the binary value is the preset value, taking a frequency domain resource associated with the corresponding bit in the frequency domain resource set as the first frequency domain resource.

For example, the fourth sub-bit sequence is 0010, four bits of the fourth sub-bit sequence correspond to four frequency domain resources in the frequency domain resource set, and the preset value is 1. Then, only the binary data corresponding to the third bit is 1. Therefore, the frequency domain resource associated with the third bit in the frequency domain resource set may be taken as the first frequency domain resource.

In another example, the fourth sub-bit sequence is 0110, four bits of the third sub-bit sequence correspond to four frequency domain resources in the frequency domain resource set, and the preset value is 1. Then, only the binary data corresponding to the second and third bits is 1. Therefore, the frequency domain resources associated with the second and third bits in the frequency domain resource set may be taken as the first frequency domain resources (i.e., there are 2 first frequency domain resources).

When the preset value is 0, analogy may be performed with reference to the above two embodiments. Details are not described herein.

In a possible implementation, when a plurality of bit sequences with a same length as the fourth sub-bit sequence are in one-to-one correspondence to frequency domain resources in the frequency domain resource set, determining the first frequency domain resource from the frequency domain resource set corresponding to the resource set according to the fourth sub-bit sequence includes:

converting the fourth sub-bit sequence into a fourth decimal number; and selecting, from the frequency domain resource set, a $y^{th}$ frequency domain resource as the first frequency domain resource; where y is the fourth decimal number, or y is determined based on the fourth decimal number and a total number of frequency domain resources included in the frequency domain resource set.

When y is determined based on the fourth decimal number and the total number of time domain resources included in the time domain resource set, y may be calculated according to the following formula:

$$j=(k_4+x_4) \bmod 2^{b2}+y_4 \quad (4);$$

where $k_4$ denotes the third decimal number, b2 is the total number of bits included in the third sub-bit sequence, and $x_4$ and $y_4$ denote offset values and may be set to constants, which may be set to, for example, a constant 0, indicating that there is no offset. If $x_4$ is set to 1, it indicates that $k_4$ is offset by 1 (i.e., $k_4$+1). If $y_4$ is set to 2, it indicates that $(k_4+1) \bmod 2^{b2}$ is offset by 2.

For example, when a plurality of bit sequences with a same length as the fourth sub-bit sequence are in one-to-one correspondence to the frequency domain resources in the frequency domain resource set, if the fourth sub-bit sequence is 011, the length of the fourth sub-bit sequence is 3, and the bit sequences with the same length (3) as the fourth sub-bit sequence include 8 bit sequences [000,001...111], which may be in one-to-one correspondence to $2^3$ (i.e., 8) resources. If $x_4$=1 and $y_4$=0, y is equal to 2, calculated by (3+1)mod8+0 according to Formula (4) above. That is, the 2nd frequency domain resource is selected from the frequency domain resource set corresponding to the resource set as the first frequency domain resource.

The above solutions for determining the first time domain resource and the first frequency domain resource may be combined arbitrarily, and therefore four solutions for determining the time-frequency resources required for the preamble sequence used by the terminal during access can be formed. The four combination manners are not described in detail one by one herein.

In the embodiments according to the present application, after a bit sequence associated with PUSCH data is determined, the bit sequence is divided into a first sub-bit sequence and a second sub-bit sequence according to a first sequence division rule; then, a preamble sequence used during access is determined from a candidate preamble sequence set based on the first sub-bit sequence; and a resource required for sending the preamble sequence used during access is determined from a resource set used for transmitting the preamble sequence based on the second sub-bit sequence. The preamble sequence used during access is sent on the resource required by the preamble sequence used during access; and the PUSCH data is sent. In this way, part of data information in the bit sequence associated with the PUSCH data can be carried through the resource sending the preamble sequence, thereby reducing information carried by the preamble sequence and reducing the number of sequences in the candidate preamble sequence set. Therefore, complexity of detection of the preamble sequence can be reduced, and a detection capability of the PRACH can be improved.

To enable those skilled in the art to fully understand the solution, several specific embodiments are provided.

Embodiment 1

It is assumed that the resource set is a time domain resource set, the bit sequence associated with the PUSCH data is a CRC check bit of the PUSCH data, the bit sequence of the CRC check bit of the PUSCH data is 1101000001101010, and the first sequence division rule is to divide the bit sequence associated with the PUSCH data into two portions that are continuous, do not overlap, and have an equal length.

The bit sequence (1101000001101010) associated with the PUSCH data is divided into a first sub-bit sequence (11010000) and a second sub-bit sequence (01101010).

The preamble sequence used when the terminal accesses the base station may be determined from the candidate preamble sequence set based on the first sub-bit sequence through the following two solutions. In the solution 1, the first sub-bit sequence (11010000) is converted into a first decimal number (208), and the 208th candidate preamble sequence is selected from the candidate preamble sequence set (including $2^8$, i.e., 256, candidate preamble sequences) as the preamble sequence used when the terminal accesses the base station. In the solution 2, the first sub-bit sequence (11010000) is converted into a first decimal number (208), data calculated according to Formula (1) is 13, and the 13th candidate preamble sequence is selected from the candidate preamble sequence set (including $2^8$, i.e., 256, candidate preamble sequences) as the preamble sequence used when the terminal accesses the base station.

There are the following three solutions of determining, based on the second sub-bit sequence (01101010), the time domain resource carrying the above preamble sequence from the time domain set. In the solution 1, if bits in the second sub-bit sequence are in one-to-one correspondence to the time domain resources in the time domain resource set and the preset value is 1, the time domain resource in the time domain resource set corresponding to the bit corresponding to the value 1 in the second sub-bit sequence is taken as the time domain resource carrying the above preamble sequence. In the solution 2, the second sub-bit sequence (01101010) is converted into a first decimal number (106), and the 106th time domain resource is selected from the time domain resource set (including $2^8$, i.e., 256, time domain resources) as the time domain resource carrying the above preamble sequence. In the solution 3, the second sub-bit sequence (01101010) is converted into a first decimal number (106), data calculated according to Formula (2) is 53, and the 53th time domain resource is selected from the time domain resource set (including $2^8$, i.e., 256, time domain resources) as the time domain resource carrying the above preamble sequence.

It is to be noted that the above resource set may also be a frequency domain resource set or a time-frequency resource set, and the processing manner is similar to the above. Details are not described.

After determining the preamble sequence used during access to the base station and the resource carrying the preamble sequence, the terminal sends the above preamble sequence on the corresponding resource, and after sending the preamble sequence, sends the PUSCH data to be sent.

Embodiment 2

It is assumed that the resource set is a time-frequency resource set (as shown in FIG. 10), each time-frequency resource in the time-frequency resource set can be used for transmitting the preamble sequence, the bit sequence associated with the PUSCH data is a CRC check bit of the PUSCH data, the bit sequence of the CRC check bit of the PUSCH data is 1101000001101010, and the first sequence division rule is to divide the bit sequence associated with the PUSCH data into two portions that are continuous, do not overlap, and have an equal length.

The bit sequence (1101000001101010) associated with the PUSCH data is divided into a first sub-bit sequence (11010000) and a second sub-bit sequence (01101010).

The preamble sequence used when the terminal accesses the base station may be determined from the candidate preamble sequence set based on the first sub-bit sequence through the following two solutions. In the solution 1, the first sub-bit sequence (11010000) is converted into a first decimal number (208), and the 208th candidate preamble sequence is selected from the candidate preamble sequence set (including $2^8$ i.e., 256, candidate preamble sequences) as the preamble sequence used when the terminal accesses the base station. In the solution 2, the first sub-bit sequence (11010000) is converted into a first decimal number (208), data calculated according to Formula (1) is 13, and the 13th candidate preamble sequence is selected from the candidate preamble sequence set (including $2^8$ i.e., 256, candidate preamble sequences) as the preamble sequence used when the terminal accesses the base station.

The time-frequency resource carrying the above preamble sequence may be determined from the time domain set based on the second sub-bit sequence (01101010) in the following manner: dividing the second sub-bit sequence (01101010) into a third sub-bit sequence (0110) and a fourth sub-bit sequence (1010) according to the second sequence division rule (similar to the first sequence division rule), and converting the third sub-bit sequence (0110) and the fourth sub-bit sequence (1010) into decimal numbers respectively to obtain a third decimal number (6) and a fourth decimal number (10). There are the following four solutions for determining the time-frequency resource carrying the preamble sequence according to the third decimal number and the fourth decimal number.

In the solution 1, the 6th time domain resource is selected from the time domain resource set corresponding to the time-frequency resource set as the first time domain resource, the 10th frequency domain resource is selected from the frequency domain resource set corresponding to the time-frequency resource set as the first frequency domain resource, and the time-frequency resource ($RE_{610}$) corresponding to the first frequency domain resource and the first time domain resource is taken as the time-frequency resource carrying the above preamble sequence.

In the solution 2, a value 3 is obtained by calculating 6 mod $2^4$ according to Formula (3), and the 3rd time domain resource is selected from the time domain resource set corresponding to the time-frequency resource set as the first time domain resource. A value of 1 is obtained by calculating 10 mod $2^4$ according to Formula (4), and the 1st frequency domain resource is selected from the frequency domain resource set corresponding to the time-frequency resource set as the first frequency domain resource. The time-frequency resource ($RE_{31}$) corresponding to the first frequency domain resource and the first time domain resource is taken as the time-frequency resource carrying the above preamble sequence.

In the solution 3, the 6th time domain resource is selected from the time domain resource set corresponding to the time-frequency resource set as the first time domain resource. A value 1 is obtained by calculating 10 mod $2^4$ according to Formula (4), and the 1st frequency domain resource is selected from the frequency domain resource set corresponding to the time-frequency resource set as the first frequency domain resource. The time-frequency resource ($RE_{61}$) corresponding to the first frequency domain resource and the first time domain resource is taken as the time-frequency resource carrying the above preamble sequence.

In the solution 4, a value 3 is obtained by calculating 6 mod $2^4$ according to Formula (3), the 3rd time domain resource is selected from the time domain resource set corresponding to the time-frequency resource set as the first time domain resource, the 10th frequency domain resource is selected from the frequency domain resource set corresponding to the time-frequency resource set as the first frequency domain resource, and the time-frequency resource ($RE_{310}$) corresponding to the first frequency domain resource and the first time domain resource is taken as the time-frequency resource carrying the above preamble sequence.

After determining the preamble sequence used during access to the base station and the resource carrying the preamble sequence, the terminal sends the above preamble sequence on the corresponding resource, and after sending the preamble sequence, sends the PUSCH data to be sent.

It is to be noted that, in Embodiment 1 and Embodiment 2 above, the offset values ($x_1$ to $x_4$, $y_1$ to $y_4$) in Formulas (1) to (4) are all set to 0.

After the above solution is introduced from the terminal side, the following introduction will be from the base station side.

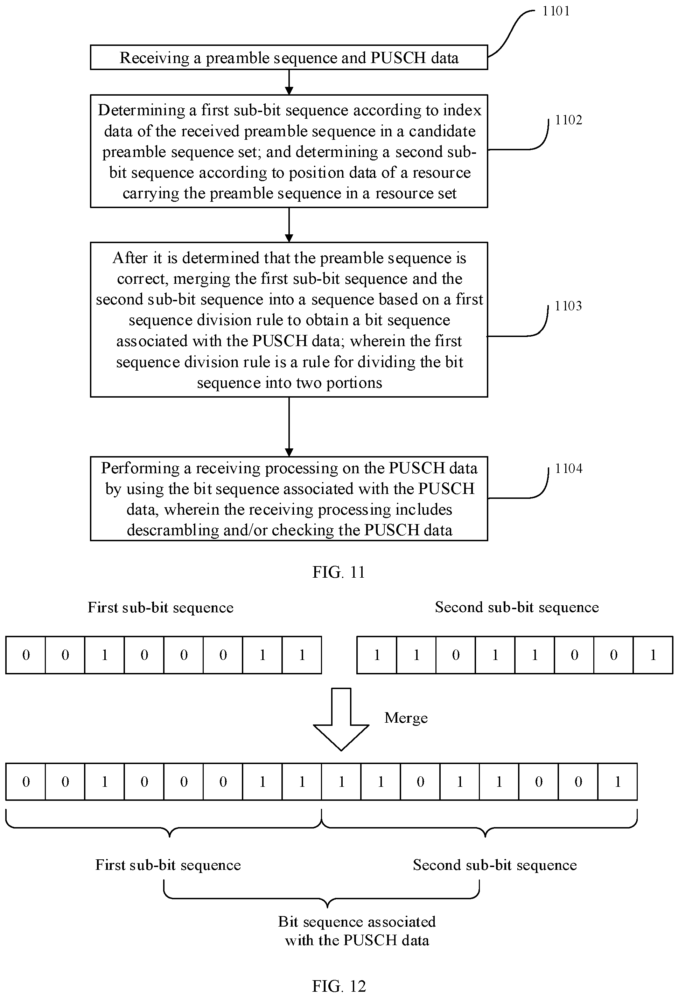

Based on a same inventive concept, embodiments of the present application provide a data transmission method applied to a base station. Referring to FIG. 11, the method includes the following steps.

In step 1101, a preamble sequence and PUSCH data are received.

In step 1102, a first sub-bit sequence is determined according to index data of the received preamble sequence in a candidate preamble sequence set; and a second sub-bit sequence is determined according to position data of a resource carrying the preamble sequence in a resource set.

For example, by comparing the received preamble sequence with candidate preamble sequences in the candidate preamble sequence set one by one, position data of the successfully matched candidate preamble sequences in the candidate preamble set is obtained, which is 13, and the first sub-bit sequence may be determined according to the position data 13. Similarly, the second sub-bit sequence may be determined according to the position data of the resource carrying the preamble sequence in the resource set.

In a possible implementation, determining the first sub-bit sequence according to index data of the received preamble sequence in the candidate preamble sequence set may be implemented in the following manners.

In the first manner, the index data of the received preamble sequence in the candidate preamble sequence set is converted into binary data, and the binary data is taken as the first sub-bit sequence; where the index data of the received preamble sequence in the candidate preamble sequence set is a decimal number.

For example, assuming that the index data of the received preamble sequence in the candidate preamble sequence set is 13, the index data is 1101 after being converted into binary data. Assuming that a total number of bits in the first sub-bit sequence is 8, the first sub-bit sequence is 00001101.

In the second manner, the first sub-bit sequence is determined according to the index data of the received preamble sequence in the candidate preamble sequence set and a total number of elements included in the candidate sequence set.

The above manner of determining the first sub-bit sequence may be deduced according to Formula (1). Details are not described herein.

In the embodiments provided in the present application, the resource set includes at least one of time domain resources or frequency domain resources used for sending the preamble sequence.

The introduction to the time domain resources, the frequency domain resources, and the time-frequency resources may be obtained with reference to the description of the terminal side. Details are not described herein.

In a possible implementation, when bits in the second sub-bit sequence are in one-to-one correspondence to the resources in the resource set, determining the second sub-bit sequence according to position data of the resource carrying the preamble sequence in the resource set may be implemented in the following manner: constructing an initial sequence based on whether each of a plurality of continuous resources carries the preamble sequence; where when the preamble sequence is received on the resource, a value of the corresponding bit in the initial sequence is set to a preset value, when the preamble sequence is not received on the resource, the value of the corresponding bit in the initial sequence is set to an inverse value of the preset value, and the preset value is 0 or 1; and constructing at least one sequence including the initial sequence and having a same length as the second sub-bit sequence as the second sub-bit sequence.

For example, the resource set is a time domain resource set, and the base station first receives the preamble sequence sent by the terminal on the time domain resource 3, does not receive the above preamble sequence on the time domain resource 4, receives the above preamble sequence on the time domain resource 5, receives the above preamble sequence on the time domain resource 6, and does not receive the above preamble sequence again. Assuming that the preamble sequence is received and the value of the bit corresponding to the time domain resource in the initial sequence is set to the preset value (assumed to be 1), the initial sequence is 1011. If the length of the second sub-bit sequence is known to be 8, sequences including the above initial sequence 1011 may be constructed as 00001011, 00010110, 00101100, 01011000, 10110000, 11111011, 11110111, 11101111, 11011111, 10111111, 10001011, and the like. These sequences are all taken as second sub-bit sequences. In step 1103, these second sub-bit sequences are merged with the first sub-bit sequence one by one to obtain a plurality of bit sequences associated with the PUSCH data, from which the correct bit sequence is determined for processing the received PUSCH data in step 1104.

In a possible implementation, when a plurality of bit sequences with a same length as the second sub-bit sequence are in one-to-one correspondence to the resources in the resource set, determining the second sub-bit sequence according to position data of the resource carrying the preamble sequence in the resource set may be implemented in the following manners.

In the first manner, the position data of the resource carrying the preamble sequence in the resource set is converted into binary data, and the binary data is taken as the second sub-bit sequence; where the position data of the resource carrying the preamble sequence in the resource set is a decimal number.

For example, assuming that the position data of the frequency domain resource carrying the preamble sequence in the frequency domain resource set is 35, the position data is 100011 after being converted into binary data. Assuming that a total number of bits in the second sub-bit sequence is 8, the second sub-bit sequence is 00100011.

In the second manner, the second sub-bit sequence is determined according to the position data of the resource carrying the preamble sequence in the resource set and a total number of elements included in the resource set.

The above manner of determining the second sub-bit sequence may be deduced according to Formula (2). Details are not described herein.

In a possible implementation, when the resource set includes a plurality of time-frequency resources used for sending the preamble sequence, determining the second sub-bit sequence according to position data of the resource carrying the preamble sequence in the resource set may be implemented in the following manner.

A third sub-bit sequence is determined according to position data of a time domain resource corresponding to a time-frequency resource carrying the preamble sequence in a time domain resource set; a fourth sub-bit sequence is determined according to position data of a frequency domain resource corresponding to a time-frequency resource carrying the preamble sequence in a frequency domain resource set; and the third sub-bit sequence and the fourth sub-bit sequence are merged into the second sub-bit sequence according to a second sequence division rule; where the second sequence division rule is a rule for dividing the second sub-bit sequence into two portions.

For example, referring to FIG. 10, assuming that the base station receives the preamble sequence sent by the terminal on the time-frequency resource $RE_{32}$, the time domain resource corresponding to the time-frequency resource $RE_{32}$ is the time domain resource 3, the frequency domain resource corresponding to the time-frequency resource $RE_{32}$ is the frequency domain resource 2, the base station may compare the time domain resource 3 with the time domain resources in the time domain resource set one by one, and determine that the position data of the time domain resource that is successfully matched with the time domain resource 3 in the time domain resource set is 3, then the third sub-bit sequence can be determined based on the position data 3. Similarly, it may be determined that position data of the frequency domain resource 2 in the frequency domain resource set is 2, and then the fourth sub-bit sequence can be determined based on the position data 2.

In a possible implementation, determining the third sub-bit sequence according to position data of the time domain resource corresponding to the time-frequency resource carrying the preamble sequence in the time domain resource set may be implemented in the following manners.

In the first manner, the position data of the time domain resource carrying the preamble sequence in the time domain resource set is converted into binary data, and the binary data is taken as the third sub-bit sequence; where the position data of the time domain resource carrying the preamble sequence in the time domain resource set is a decimal number.

For example, the position data of the time domain resource carrying the preamble sequence in the time domain resource set is 3. It is assumed that the length of the third sub-bit sequence is 4, and the above position data 3 is converted into binary data 11. Since the length of the third sub-bit sequence is 4, it may be determined that the third sub-bit sequence is 0011.

In the second manner, the third sub-bit sequence is determined according to the position data of the time domain resource carrying the preamble sequence in the time domain resource set and a total number of elements included in the time domain resource set.

The third sub-bit sequence may be determined according to an inverse operation of Formula (3). Details are not described herein.

In a possible implementation, determining the fourth sub-bit sequence according to position data of the frequency domain resource corresponding to the time-frequency resource carrying the preamble sequence in a frequency domain resource set may be implemented in the following manners.

In the first manner, the position data of the frequency domain resource carrying the preamble sequence in the frequency domain resource set is converted into binary data, and the binary data is taken as the fourth sub-bit sequence; where the position data of the frequency domain resource carrying the preamble sequence in the frequency domain resource set is a decimal number.

For example, the position data of the frequency domain resource carrying the preamble sequence in the frequency domain resource set is 2, and the length of the fourth sub-bit sequence is 2. Then the above position data 2 is converted into binary data 10. Since the length of the fourth sub-bit sequence is 2, it may be determined that the fourth sub-bit sequence is 10.

It is assumed that the third sub-bit sequence is determined to be 0011 according to the method introduced above. If the second sequence division rule is to divide the second sub-bit sequence into a third sub-bit sequence and a fourth sub-bit sequence that are continuous and do not overlap, the third sub-bit sequence 0011 and the fourth sub-bit sequence 10 determined above may be merged into a sequence 001110, and the sequence 001110 is taken as the second sub-bit sequence. If the second sequence division rule is to divide the second sub-bit sequence into a third sub-bit sequence and a fourth sub-bit sequence that are discontinuous (such as alternating) and do not overlap, the third sub-bit sequence 0011 and the fourth sub-bit sequence 10 determined above may be merged into a sequence 010011, and the sequence 010011 is taken as the second sub-bit sequence.

In the second manner, the fourth sub-bit sequence is determined according to the position data of the frequency domain resource carrying the preamble sequence in the frequency domain resource set and a total number of elements included in the frequency domain resource set.

The fourth sub-bit sequence may be determined according to an inverse operation of Formula (4). Details are not described herein.

Step 1103 and step 1104 may be performed after the first sub-bit sequence and the second sub-bit sequence are determined in the manner introduced above.

In step 1103, after it is determined that the preamble sequence is correct, the first sub-bit sequence and the second sub-bit sequence are merged into a sequence according to on a first sequence division rule to obtain a bit sequence associated with the PUSCH data; where the first sequence division rule is a rule for dividing the bit sequence into two portions.

In step 1104, a receiving processing is performed on the PUSCH data by using the bit sequence associated with the PUSCH data, where the receiving processing includes descrambling and/or checking the PUSCH data.

The base station is required to first determine whether the received preamble sequence is correct. Since determining whether the received preamble sequence is correct is a prior art, details are not described herein. After it is determined that the preamble sequence is correct, the first sub-bit sequence and the second sub-bit sequence are merged according to the first sequence division rule, and a sequence obtained after merging is the bit sequence associated with the PUSCH data.

For example, referring to FIG. 12, which is a schematic diagram of merging of a first sub-bit sequence and a second sub-bit sequence according to embodiments of the present application, it is assumed that the first sub-bit sequence is 00101011 and the second sub-bit sequence is 11011001, and the first sequence division rule is to divide the bit sequence into a first sub-bit sequence and a second sub-bit sequence that are continuous, do not overlap, and have an equal length. Therefore, the first sub-bit sequence 00101011 and the second sub-bit sequence 11011001 can be merged into a sequence 0010101111011001, and this sequence is the bit sequence associated with the PUSCH data. In this way, the base station can use the bit sequence 0010101111011001 associated with the PUSCH data to perform the receiving processing on the PUSCH data received from the terminal. If the bit sequence 0010101111011001 associated with the PUSCH data is a CRC check bit, CRC check is performed on the PUSCH data by using this bit sequence. If the bit sequence 0010101111011001 associated with the PUSCH data is a terminal identifier of a user or a feature bit in the PUSCH data, the PUSCH data is descrambled by using this bit sequence.

When the first sequence division rule is either one in FIG. 5 or FIG. 6, the first sub-bit sequence and the second self-bit sequence may be reversely merged in the corresponding manner. Details are not described herein.

To enable those skilled in the art to fully understand the above solution, two specific embodiments will be provided below.

Embodiment 3 (corresponding to Embodiment 1)

It is assumed that the resource set is a time domain resource set, the bit sequence associated with the PUSCH data is a CRC check bit of the PUSCH data, the bit sequence of the CRC check bit of the PUSCH data is 1101000001101010, and the first sequence division rule is to divide the bit sequence associated with the PUSCH data into two portions that are continuous, do not overlap, and have an equal length.

The base station receives a preamble sequence sent by the terminal as a preamble sequence, and determines that a resource carrying the preamble sequence is a time domain resource. By comparing the above preamble sequence with candidate preamble sequences in the candidate preamble sequence set one by one, it is determined that the preamble sequence is successfully matched with the 208th/13th candidate preamble sequence in the candidate preamble sequence set, then index data of the 208th/13th candidate preamble sequence in the candidate preamble sequence set is obtained as 208/13, and the first sub-bit sequence is determined to be 11010000 according to the position data 208/13. At the same time, by comparing the above time domain resource carrying the preamble sequence with time domain resources in the time domain resource set one by one, it may be determined that position data of the successfully matched time domain resource is 106/53, and the second sub-bit sequence is determined to be 01101010 according to the position data 106/53. In addition, if bits of the second sub-bit sequence are in one-to-one correspondence to the time domain resources in the time domain resource set and the preset value is 1, assuming that the base station begins to receive the above preamble sequence at a certain moment (a value of the corresponding first bit in the initial sequence is set to 1), whether the above preamble sequence is received at next five moments is: received - not received - received - not received - received, and the above preamble sequence is not received after the 6th moment, so it can be determined that the initial sequence is 110101. Since the length of the second sub-bit sequence is known to be 8, a second sub-bit sequence including the above initial sequence may be constructed as 00110101, 01110101, 10110101, 11110101, 11010100, 11010101, 11010110, 11010111, 01101010, 11101010, or 01101011.

The first sub-bit sequence (11010000) and the second sub-bit sequence (01101010) are merged according to the first sequence division rule to obtain a bit sequence (1101000001101010) associated with the received PUSCH data. After it is determined that the received preamble is correct, CRC check (i.e., receiving processing) is performed on the received PUSCH data by using the bit sequence.

It should be understood that, for the above situation where it is determined that the second sub-bit sequence includes a plurality of different sequences, each possible sequence is merged with the first sub-bit sequence to perform the receiving processing on the received PUSCH data. If the receiving processing is successful, it indicates that the corresponding second sub-bit sequence is correct.

Embodiment 4 (corresponding to Embodiment 2)

Assuming that the resource set is a time-frequency resource set shown in FIG. 10, each time-frequency resource in the time-frequency resource set can be used for transmitting the preamble sequence, the bit sequence associated with the PUSCH data is a CRC check bit of the PUSCH data, the bit sequence of the CRC check bit of the PUSCH data is 1101000001101010, and the first sequence division rule is to divide the bit sequence associated with the PUSCH data into two portions that are continuous, do not overlap, and have an equal length.

The base station receives a preamble sequence sent by the terminal as a preamble sequence, and determines that a resource carrying the preamble sequence is a time domain resource. By comparing the above preamble sequence with candidate preamble sequences in the candidate preamble sequence set one by one, it is determined that the preamble sequence is successfully matched with the 208th/13th candidate preamble sequence in the candidate preamble sequence set, then index data of the 208th/13th candidate preamble sequence in the candidate preamble sequence set is obtained as 208/13, and the first sub-bit sequence is determined to be 11010000 according to the position data 208/13. At the same time, by comparing the above time-frequency resource carrying the preamble sequence with the time-frequency resources in the time-frequency resource set one by one, it may be determined that the successfully matched time-frequency resource is $RE_{610}$, and it may be determined that position data of the corresponding time domain resource in the time domain resource set is 6 and a position of the corresponding frequency domain resource in the frequency domain resource set is 10. The position data 6 is converted into binary data 110. Since the length of the third sub-bit sequence is 4, it may be determined that the third sub-bit sequence is 0110. The position data 10 is converted into binary data 1010, and it may be determined that the fourth sub-bit sequence is 1010. The third sub-bit sequence 0110 and the fourth sub-bit sequence 1010 are merged into 01101010 according to the second sequence division rule, to obtain that the second sub-bit sequence is 01101010.

The first sub-bit sequence (11010000) and the second sub-bit sequence (01101010) are merged into 1101000001101010 according to the first sequence division rule to obtain a bit sequence (1101000001101010) associated with the received PUSCH data. After it is determined that the received preamble sequence is correct, CRC check (i.e., receiving processing) is performed on the received PUSCH data by using the bit sequence (1101000001101010) associated with the received PUSCH data.

Other solutions for determining the third sub-bit sequence and the fourth sub-bit sequence may be obtained with reference to the related description above. Details are not described herein.

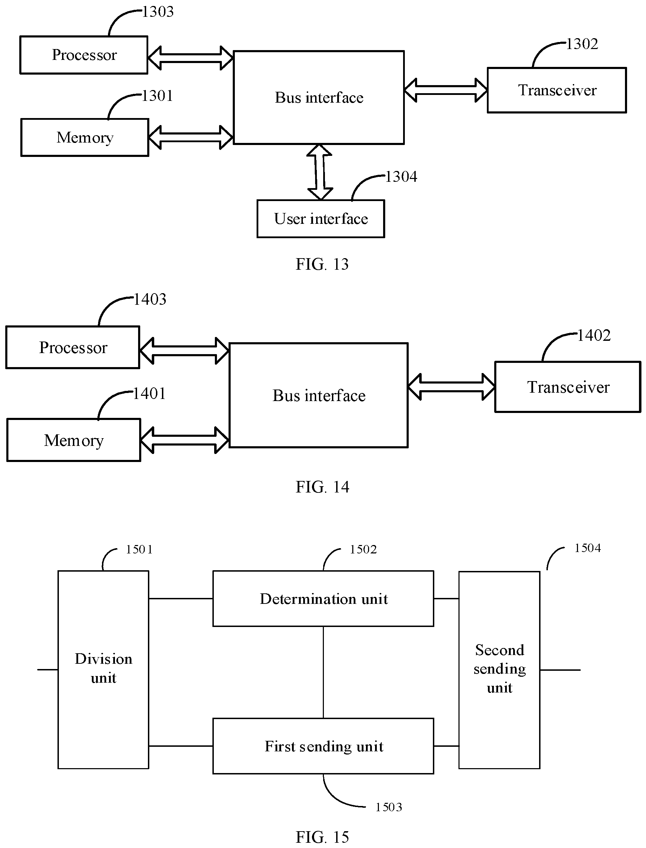

As shown in FIG. 13, a terminal according to embodiments of the present application includes a memory 1301, a transceiver 1302, and a processor 1303.

The memory 1301 is configured to store a computer program. The transceiver 1302 is configured to transmit and receive data under the control of the processor 1303. The processor 1303 is configured to read the computer program in the memory 1301 and perform the following operations:

determining a bit sequence associated with PUSCH data to be sent; and obtaining a first sub-bit sequence and a second sub-bit sequence from the bit sequence according to a first sequence division rule, where the first sequence division rule is a rule for dividing the bit sequence into two portions;
determining, from a candidate preamble sequence set, a preamble sequence used during access based on the first sub-bit sequence; and determining, from a resource set used for transmitting the preamble sequence, a resource required for sending the preamble sequence used during access based on the second sub-bit sequence;
sending the preamble sequence used during access on the resource required by the preamble sequence used during access; and
sending the PUSCH data.

In a possible implementation, the processor 1303 is further configured to:

obtain, from the PUSCH data, at least one sequence of a sequence corresponding to a CRC check bit, a sequence corresponding to a terminal identifier, or a sequence corresponding to a feature bit in the PUSCH data; and
take the at least one sequence as the bit sequence associated with the PUSCH data.

In a possible implementation, the feature bit includes:

first N bits in the PUSCH data;
last N bits in the PUSCH data; or
N bits determined from the PUSCH data according to a preset rule;
where N is a positive integer.

In a possible implementation, the first sequence division rule includes:
dividing the bit sequence into two portions, each of which is a continuous or discontinuous sequence.

In a possible implementation, positions of the two portions, each of which is a continuous or discontinuous sequence, in the bit sequence do not overlap or partially overlap.

In a possible implementation, the processor 1303 is further configured to:

convert the first sub-bit sequence into a first decimal number; and
select, from the candidate preamble sequence set, a candidate preamble sequence corresponding to the first decimal number as the preamble sequence used during access.

In a possible implementation, the processor 1303 is further configured to:
select, from the candidate preamble sequence set, an $i^{th}$ candidate preamble sequence as the preamble sequence used during access; where i is the first decimal number, or i is determined based on the first decimal number and a total number of elements included in the candidate preamble sequence set.

In a possible implementation, the resource set includes at least one of time domain resources or frequency domain resources used for sending the preamble sequence.

In a possible implementation, when each bit in the second sub-bit sequence is associated with one resource in the resource set, the processor 1303 is further configured to:

determine whether a binary value of each bit in the second sub-bit sequence is a preset value; where the preset value is binary data 0 or 1; and
if the binary value is the preset value, take the resource associated with the corresponding bit in the resource set as the resource required by the preamble sequence used during access.

In a possible implementation, when a plurality of bit sequences with a same length as the second sub-bit sequence are in one-to-one correspondence to the resources in the resource set, the processor 1303 is further configured to:

convert the second sub-bit sequence into a second decimal number; and
select, from the resource set, a $j^{th}$ resource as the resource required by the preamble sequence used during access; where j is the second decimal number, or j is determined based on the second decimal number and a total number of resources included in the resource set.

In a possible implementation, when the resource set includes a plurality of time-frequency resources used for sending the preamble sequence, the processor 1303 is further configured to:

obtain, according to a second sequence division rule, a third sub-bit sequence and a fourth sub-bit sequence from the second sub-bit sequence; where the second sequence division rule is a rule for dividing the second sub-bit sequence into two portions;
determine a first time domain resource from a time domain resource set corresponding to the resource set according to the third sub-bit sequence; and determine a first frequency domain resource from a frequency domain resource set corresponding to the resource set according to the fourth sub-bit sequence; and
take a time-frequency resource corresponding to the first time domain resource and the first frequency domain resource as the resource required by the preamble sequence used during access.

In a possible implementation, when bits in the third sub-bit sequence are in one-to-one correspondence to time domain resources in the time domain resource set, the processor 1303 is further configured to:

determine whether a binary value of each bit in the third sub-bit sequence is a preset value; where the preset value is binary data 0 or 1; and
if the binary value is the preset value, take a time domain resource associated with the corresponding bit in the time domain resource set as the first time domain resource.

In a possible implementation, when a plurality of bit sequences with a same length as the third sub-bit sequence are in one-to-one correspondence to time domain resources in the time domain resource set, the processor 1303 is further configured to:

convert the third sub-bit sequence into a third decimal number; and
select, from the time domain resource set, an $x^{th}$ time domain resource as the first time domain resource; where x is the third decimal number, or x is determined based on the third decimal number and a total number of time domain resources included in the time domain resource set.

In a possible implementation, when bits in the fourth sub-bit sequence are in one-to-one correspondence to frequency domain resources in the frequency domain resource set, the processor 1303 is further configured to:

determine whether a binary value of each bit in the fourth sub-bit sequence is a preset value; where the preset value is binary data 0 or 1; and
if the binary value is the preset value, take a frequency domain resource associated with the corresponding bit in the frequency domain resource set as the first frequency domain resource.

In a possible implementation, when a plurality of bit sequences with a same length as the fourth sub-bit sequence are in one-to-one correspondence to frequency domain resources in the frequency domain resource set, the processor 1303 is further configured to:

convert the fourth sub-bit sequence into a fourth decimal number; and
select, from the frequency domain resource set, a $y^{th}$ frequency domain resource as the first frequency domain resource; where y is the fourth decimal number, or y is determined based on the fourth decimal number and a total number of frequency domain resources included in the frequency domain resource set.

The transceiver 1302 is configured to receive and transmit data under the control of the processor 1303.
In FIG. 13, a bus architecture may include any number of interconnecting buses and bridges to particularly link together various circuits including one or more processors represented by the processor 1303 and one or more memories represented by the memory 1301. The bus architecture may further link together various other circuits, such as a peripheral, a voltage stabilizer, and a power management circuit, all of which are well known in the art and thus will not be further described herein. The bus interface serves as an interface. The transceiver 1302 may include a plurality of elements, e.g., a transmitter and a receiver, which are units for communication with various other apparatuses over transmission media. These transmission media include wireless channels, wired channels, optical cables, and other transmission media. With respect to different UEs, a user interface 1304 may also be provided for devices which are to be arranged inside or outside the UE, and these devices may include, but are not limited to, a keypad, a display, a speaker, a microphone, or a joystick.
The processor 1303 is responsible for managing the bus architecture and performing normal processing. The memory 1301 may store data used when the processor 1303 performs operations.
Optionally, the processor 1303 may be a central processing unit (CPU), an application specific integrated circuit (ASIC), a field-programmable gate array (FPGA), or a complex programmable logic device (CPLD). The processor may alternatively adopt a multi-core architecture.
The processor invokes the computer program stored in the memory, and is configured to perform, according to the obtained executable instruction, any one of the methods provided in the embodiments of the present application. The processor and the memory may alternatively be physically separated.
Referring to FIG. 14, a base station is provided according to embodiments of the present application, which includes a memory 1401, a transceiver 1402, and a processor 1403.
The memory 1401 is configured to store a computer program. The transceiver 1402 is configured to transmit and receive data under the control of the processor 1403. The processor 1403 is configured to read the computer program in the memory 1401 and perform the following operations:

receiving a preamble sequence and PUSCH data;
determining a first sub-bit sequence according to index data of the received preamble sequence in a candidate preamble sequence set; and determining a second sub-bit sequence according to position data of a resource carrying the preamble sequence in a resource set;
after it is determined that the preamble sequence is correct, merging the first sub-bit sequence and the second sub-bit sequence into a sequence according to a first sequence division rule to obtain a bit sequence associated with the PUSCH data; the first sequence division rule being a rule for dividing the bit sequence into two portions; and
performing a receiving processing on the PUSCH data by using the bit sequence associated with the PUSCH data, the receiving processing including descrambling and/or checking the PUSCH data.

In a possible implementation, the processor 1403 is further configured to:

convert the index data of the received preamble sequence in the candidate preamble sequence set into binary data, and take the binary data as the first sub-bit sequence; where the index data of the received preamble sequence in the candidate preamble sequence set is a decimal number; or
determine the first sub-bit sequence according to the index data of the received preamble sequence in the candidate preamble sequence set and a total number of elements included in the candidate sequence set.

In a possible implementation, the resource set includes at least one of time domain resources or frequency domain resources used for sending the preamble sequence.
In a possible implementation, when bits in the second sub-bit sequence are in one-to-one correspondence to the resources in the resource set, the processor 1403 is further configured to:

construct an initial sequence based on whether each of a plurality of continuous resources carries the preamble sequence; where when the preamble sequence is received on the resource, a value of the corresponding bit in the initial sequence is set to a preset value, when the preamble sequence is not received on the resource, the value of the corresponding bit in the initial sequence is set to an inverse value of the preset value, and the preset value is 0 or 1; and construct at least one sequence including the initial sequence and having a same length as the second sub-bit sequence as the second sub-bit sequence.

In a possible implementation, when a plurality of bit sequences with a same length as the second sub-bit sequence are in one-to-one correspondence to the resources in the resource set, the processor 1403 is further configured to:

convert the position data of the resource carrying the preamble sequence in the resource set into binary data, and take the binary data as the second sub-bit sequence; where the position data of the resource carrying the preamble sequence in the resource set is a decimal number; or

determine the second sub-bit sequence according to the position data of the resource carrying the preamble sequence in the resource set and a total number of elements included in the resource set.

In a possible implementation, when the resource set includes a plurality of time-frequency resources used for sending the preamble sequence, the processor 1403 is further configured to:

determine a third sub-bit sequence according to position data of a time domain resource corresponding to a time-frequency resource carrying the preamble sequence in a time domain resource set;

determine a fourth sub-bit sequence according to position data of a frequency domain resource corresponding to a time-frequency resource carrying the preamble sequence in a frequency domain resource set; and

merge the third sub-bit sequence and the fourth sub-bit sequence into the second sub-bit sequence according to a second sequence division rule; where the second sequence division rule is a rule for dividing the second sub-bit sequence into two portions.

In a possible implementation, the processor 1403 is further configured to:

convert the position data of the time domain resource carrying the preamble sequence in the time domain resource set into binary data, and take the binary data as the third sub-bit sequence; where the position data of the time domain resource carrying the preamble sequence in the time domain resource set is a decimal number; or

determine the third sub-bit sequence according to the position data of the time domain resource carrying the preamble sequence in the time domain resource set and a total number of elements included in the time domain resource set.

In a possible implementation, the processor 1403 is further configured to:

convert the position data of the frequency domain resource carrying the preamble sequence in the frequency domain resource set into binary data, and take the binary data as the fourth sub-bit sequence; where the position data of the frequency domain resource carrying the preamble sequence in the frequency domain resource set is a decimal number; or

determine the fourth sub-bit sequence according to the position data of the frequency domain resource carrying the preamble sequence in the frequency domain resource set and a total number of elements included in the frequency domain resource set.

The transceiver 1402 is configured to receive and transmit data under the control of the processor 1403.

In FIG. 14, a bus architecture may include any number of interconnecting buses and bridges to particularly link together various circuits including one or more processors represented by the processor 1403 and one or more memories represented by the memory 1401. The bus architecture may further link together various other circuits, such as a peripheral, a voltage stabilizer, and a power management circuit, all of which are well known in the art, so a further description thereof will be omitted herein. The bus interface serves as an interface. The transceiver 1402 may be a plurality of elements, e.g., a transmitter and a receiver, which are units for communication with various other apparatuses over transmission media. These transmission media include wireless channels, wired channels, optical cables, and other transmission media. The processor 1403 is responsible for managing the bus architecture and performing normal processing. The memory 1401 may store data used when the processor 1403 performs operations.

The processor 1403 may be a CPU, an ASIC, an FPGA, or a CPLD. The processor may alternatively adopt a multi-core architecture.

It should be noted that the above apparatus according to the embodiments of the present application can implement all the method steps implemented in the above method embodiments, and can achieve the same technical effect. Parts and beneficial effects in this embodiment that are the same as those in the method embodiment will not be described in detail herein.

Based on a same inventive concept, an embodiment of the present application provides a terminal. A specific implementation of a data transmission method for the terminal may be obtained with reference to the description of the part in the method embodiment on the terminal side. Details are not described again. Referring to FIG. 15, the terminal includes:

a division unit 1501 configured to determine a bit sequence associated with PUSCH data to be sent; and according to a first sequence division rule, obtain a first sub-bit sequence and a second sub-bit sequence from the bit sequence, the first sequence division rule being a rule for dividing the bit sequence into two portions;

a determination unit 1502 configured to, determine a preamble sequence used during access from a candidate preamble sequence set based on the first sub-bit sequence; and determine, from a resource set used for transmitting the preamble sequence, a resource required for sending the preamble sequence used during access based on the second sub-bit sequence;

a first sending unit 1503 configured to send the preamble sequence used during access on the resource required by the preamble sequence used during access; and

a second sending unit 1504 configured to send the PUSCH data.

In a possible implementation, the division unit 1501 is further configured to:

obtain, from the PUSCH data, at least one sequence of a sequence corresponding to a CRC check bit, a sequence corresponding to a terminal identifier, or a sequence corresponding to a feature bit in the PUSCH data; and take the at least one sequence as the bit sequence associated with the PUSCH data.

In a possible implementation, the feature bit includes:

first N bits in the PUSCH data;
last N bits in the PUSCH data; or
N bits determined from the PUSCH data according to a preset rule;
where N is a positive integer.

In a possible implementation, the first sequence division rule includes:
dividing the bit sequence into two portions, each of which is a continuous or discontinuous sequence.

In a possible implementation, positions of the two portions, each of which is a continuous or discontinuous sequence, in the bit sequence do not overlap or partially overlap.

In a possible implementation, the determination unit 1502 is further configured to:

convert the first sub-bit sequence into a first decimal number; and
select, from the candidate preamble sequence set, a candidate preamble sequence corresponding to the first decimal number as the preamble sequence used during access.

In a possible implementation, the determination unit 1502 is further configured to:
select, from the candidate preamble sequence set, an $i^{th}$ candidate preamble sequence as the preamble sequence used during access; where i is the first decimal number, or i is determined based on the first decimal number and a total number of elements included in the candidate preamble sequence set.

In a possible implementation, the resource set includes at least one of time domain resources or frequency domain resources used for sending the preamble sequence.

In a possible implementation, when each bit in the second sub-bit sequence is associated with one resource in the resource set, the determination unit 1502 is further configured to:

determine whether a binary value of each bit in the second sub-bit sequence is a preset value; where the preset value is binary data 0 or 1; and
if the binary value is the preset value, take the resource associated with the corresponding bit in the resource set as the resource required by the preamble sequence used during access.

In a possible implementation, when a plurality of bit sequences with a same length as the second sub-bit sequence are in one-to-one correspondence to the resources in the resource set, the determination unit 1502 is further configured to:

convert the second sub-bit sequence into a second decimal number; and

select, from the resource set, a j<sup>th</sup> resource as the resource required by the preamble sequence used during access; where j is the second decimal number, or j is determined based on the second decimal number and a total number of resources included in the resource set.

In a possible implementation, when the resource set includes a plurality of time-frequency resources used for sending the preamble sequence, the determination unit 1502 is further configured to:

obtain, according to a second sequence division rule, a third sub-bit sequence and a fourth sub-bit sequence from the second sub-bit sequence; where the second sequence division rule is a rule for dividing the second sub-bit sequence into two portions;

determine a first time domain resource from a time domain resource set corresponding to the resource set according to the third sub-bit sequence; and determine a first frequency domain resource from a frequency domain resource set corresponding to the resource set according to the fourth sub-bit sequence; and

take a time-frequency resource corresponding to the first time domain resource and the first frequency domain resource as the resource required by the preamble sequence used during access.

In a possible implementation, when bits in the third sub-bit sequence are in one-to-one correspondence to time domain resources in the time domain resource set, the determination unit 1502 is further configured to:

determine whether a binary value of each bit in the third sub-bit sequence is a preset value; where the preset value is binary data 0 or 1; and

if the binary value is the preset value, take a time domain resource associated with the corresponding bit in the time domain resource set as the first time domain resource.

In a possible implementation, when a plurality of bit sequences with a same length as the third sub-bit sequence are in one-to-one correspondence to time domain resources in the time domain resource set, the determination unit 1502 is further configured to:

convert the third sub-bit sequence into a third decimal number; and

select, from the time domain resource set, an x<sup>th</sup> time domain resource as the first time domain resource; where x is the third decimal number, or x is determined based on the third decimal number and a total number of time domain resources included in the time domain resource set.

In a possible implementation, when bits in the fourth sub-bit sequence are in one-to-one correspondence to frequency domain resources in the frequency domain resource set, the determination unit 1502 is further configured to:

determine whether a binary value of each bit in the fourth sub-bit sequence is a preset value; where the preset value is binary data 0 or 1; and

if the binary value is the preset value, take a frequency domain resource associated with the corresponding bit in the frequency domain resource set as the first frequency domain resource.

In a possible implementation, when a plurality of bit sequences with a same length as the fourth sub-bit sequence are in one-to-one correspondence to frequency domain resources in the frequency domain resource set, the determination unit 1502 is further configured to:

convert the fourth sub-bit sequence into a fourth decimal number; and

select, from the frequency domain resource set, a y<sup>th</sup> frequency domain resource as the first frequency domain resource; where y is the fourth decimal number, or y is determined based on the fourth decimal number and a total number of frequency domain resources included in the frequency domain resource set.

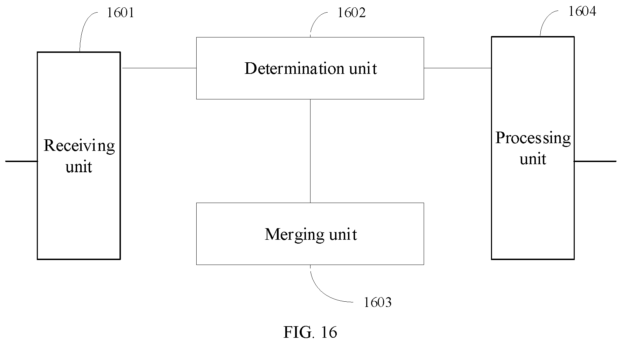

Based on a same inventive concept, an embodiment of the present application provides a base station. A specific implementation of a data transmission method for the base station may be obtained with reference to the description of the part in the method embodiment on the base station side. Details are not described again. Referring to FIG. 16, the base station includes:

a receiving unit 1601 configured to receive a preamble sequence and PUSCH data;

a determination unit 1602 configured to determine a first sub-bit sequence according to index data of the received preamble sequence in a candidate preamble sequence set; and determine a second sub-bit sequence according to position data of a resource carrying the preamble sequence in a resource set;

a merging unit 1603 configured to, after it is determined that the preamble sequence is correct, merge the first sub-bit sequence and the second sub-bit sequence into a sequence according to a first sequence division rule to obtain a bit sequence associated with the PUSCH data; where the first sequence division rule is a rule for dividing the bit sequence into two portions; and

a processing unit 1604 configured to perform a receiving processing on the PUSCH data by using the bit sequence associated with the PUSCH data, where the receiving processing includes descrambling and/or checking the PUSCH data.

In a possible implementation, the determination unit 1602 is further configured to:

convert the index data of the received preamble sequence in the candidate preamble sequence set into binary data, and take the binary data as the first sub-bit sequence; where the index data of the received preamble sequence in the candidate preamble sequence set is a decimal number; or

determine the first sub-bit sequence according to the index data of the received preamble sequence in the candidate preamble sequence set and a total number of elements included in the candidate sequence set.

In a possible implementation, the resource set includes at least one of time domain resources or frequency domain resources used for sending the preamble sequence.

In a possible implementation, when bits in the second sub-bit sequence are in one-to-one correspondence to the resources in the resource set, the determination unit 1602 is further configured to:

construct an initial sequence based on whether each of a plurality of continuous resources carries the preamble sequence; where when the preamble sequence is received on the resource, a value of the corresponding bit in the initial sequence is set to a preset value, when the preamble sequence is not received on the resource, the value of the corresponding bit in the initial sequence is set to an inverse value of the preset value, and the preset value is 0 or 1; and

construct at least one sequence including the initial sequence and having a same length as the second sub-bit sequence as the second sub-bit sequence.

In a possible implementation, when a plurality of bit sequences with a same length as the second sub-bit sequence are in one-to-one correspondence to the resources in the resource set, the determination unit 1602 is further configured to:

convert the position data of the resource carrying the preamble sequence in the resource set into binary data, and take the binary data as the second sub-bit sequence; where the position data of the resource carrying the preamble sequence in the resource set is a decimal number; or

determine the second sub-bit sequence according to the position data of the resource carrying the preamble sequence in the resource set and a total number of elements included in the resource set.

In a possible implementation, when the resource set includes a plurality of time-frequency resources used for sending the preamble sequence, the determination unit 1602 is further configured to:

determine a third sub-bit sequence according to position data of a time domain resource corresponding to a time-frequency resource carrying the preamble sequence in a time domain resource set;

determine a fourth sub-bit sequence according to position data of a frequency domain resource corresponding to a time-frequency resource carrying the preamble sequence in a frequency domain resource set; and

merge the third sub-bit sequence and the fourth sub-bit sequence into the second sub-bit sequence according to a second sequence division rule; where the second sequence division rule is a rule for dividing the second sub-bit sequence into two portions.

In a possible implementation, the determination unit 1602 is further configured to:

convert the position data of the time domain resource carrying the preamble sequence in the time domain resource set into binary data, and take the binary data as the third sub-bit sequence; where the position data of the time domain resource carrying the preamble sequence in the time domain resource set is a decimal number; or

determine the third sub-bit sequence according to the position data of the time domain resource carrying the preamble sequence in the time domain resource set and a total number of elements included in the time domain resource set.

In a possible implementation, the determination unit 1602 is further configured to:

convert the position data of the frequency domain resource carrying the preamble sequence in the frequency domain resource set into binary data, and take the binary data as the fourth sub-bit sequence; where the position data of the frequency domain resource carrying the preamble sequence in the frequency domain resource set is a decimal number; or

determine the fourth sub-bit sequence according to the position data of the frequency domain resource carrying the preamble sequence in the frequency domain resource set and a total number of elements included in the frequency domain resource set.

It should be noted that the division of units in the embodiments of the present application is illustrative and is only a logical function division. In actual implementation, there may be other division manners. In addition, various functional units in the embodiments of the present application may be integrated into one processing unit, or each unit may exist physically alone, or two or more units may be integrated into one unit. The above integrated units may be implemented in a form of hardware or in a form of software functional units.

If the integrated unit is implemented in a form of a software functional unit and sold or taken as a separate product, it may be stored in a processor-readable storage medium. Based on such an understanding, the technical solutions in the present application essentially, or the part contributing to the prior art, all or some of the technical solutions may be implemented in a form of a software product. The computer software product is stored in a storage medium, and includes several instructions for causing a computer device (which may be a personal computer, a server, a network device, or the like) or a processor to perform all or some of the steps of the methods according to the embodiments of the present application. The foregoing storage medium includes: any medium that can store program code, such as a USB flash drive, a removable hard disk, a read-only memory (ROM), a random access memory (RAM), a magnetic disk, or an optical disc.

It should be noted that the above apparatus according to the embodiments of the present application can implement all the method steps implemented in the above method embodiments, and can achieve the same technical effect. Parts and beneficial effects in this embodiment that are the same as those in the method embodiment are described in detail herein.

Based on a same inventive concept, embodiments of the present application further provide a processor-readable storage medium. The processor-readable storage medium stores a computer program. The computer program is used for causing the processor to perform the data transmission method on the terminal side or the base station side as described above.

The processor-readable storage medium may be any available media or data storage device accessible to a processor, including, but not limited to, a magnetic memory (such as a floppy disk, a hard disk, a magnetic tape, or a magnetic optical disk (MO)), an optical memory (such as a CD, a DVD, a BD, or an HVD), a semiconductor memory (such as a ROM, an EPROM, an EEPROM, a nonvolatile memory (NAND FLASH), a solid state disk (SSD)), and the like.

Those skilled in the art should understand that the embodiments of the present application may be provided as a method, a system, or a computer program product. Therefore, the present application may be in a form of hardware only embodiments, software only embodiments, or embodiments with a combination of software and hardware. Moreover, the present application may be in a form of a computer program product that is implemented on one or more computer-usable storage media (including, but not limited to. a magnetic disk memory, an optical memory, and the like) that include computer-usable program code.

The present application is described with reference to the flowcharts and/or the block diagrams of the method, the device (system), and the computer program product according to the embodiments of the present application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of another programmable data processing device generate an apparatus configured to implement a function specified in one or more processes in the flowcharts and/or in one or more blocks in the block diagrams.

These processor-executable instructions may be stored in a processor-readable memory that can instruct the computer or another programmable data processing device to operate in a specific manner, so that the instructions stored in the processor-readable memory generate an artifact that includes an instruction apparatus. The instruction apparatus implements a function specified in one or more processes in the flowcharts and/or in one or more blocks in the block diagrams.

These processor-executable instructions may alternatively be loaded onto the computer or another programmable data processing device, so that a series of operations and steps are performed on the computer or the another programmable device, thereby generating computer-implemented processing. Therefore, the instructions executed on the computer or the another programmable device provide steps for implementing a function specified in one or more processes in the flowcharts and/or in one or more blocks in the block diagrams.

Obviously, those skilled in the art can make various changes and modifications to the present application without departing from the spirit and scope of the present application. In this way, if these modifications and variations of the present application fall within the scope of the claims of the present application and equivalent technologies thereof, the present application is also intended to include these modifications and variations.

**Claims**

1. A data transmission method, **characterized in that** the method comprises:

   determining a bit sequence associated with physical uplink shared channel (PUSCH) data to be sent; and obtaining a first sub-bit sequence and a second sub-bit sequence from the bit sequence according to a first sequence division rule, wherein the first sequence division rule is a rule for dividing the bit sequence into two portions;
   determining, from a candidate preamble sequence set, a preamble sequence used during access based on the first sub-bit sequence; and determining, from a resource set used for transmitting the preamble sequence, a resource required for sending the preamble sequence used during access based on the second sub-bit sequence;
   sending, on the resource required by the preamble sequence used during access, the preamble sequence used during access; and
   sending the PUSCH data.

2. The method according to claim 1, wherein determining the bit sequence associated with the PUSCH data to be sent comprises:

   obtaining, from the PUSCH data, at least one sequence of a sequence corresponding to a cyclic redundancy check (CRC) check bit, a sequence corresponding to a terminal identifier, or a sequence corresponding to a feature bit in the PUSCH data; and
   taking the at least one sequence as the bit sequence associated with the PUSCH data.

3. The method according to claim 2, wherein the feature bit comprises:

   first N bits in the PUSCH data;
   last N bits in the PUSCH data; or
   N bits determined from the PUSCH data according to a preset rule;
   wherein N is a positive integer.

4. The method according to any one of claims 1 to 3, wherein the first sequence division rule comprises:
   dividing the bit sequence into two portions, each of which is a continuous or discontinuous sequence.

5. The method according to claim 4, wherein positions of the two portions, each of which is a continuous or discontinuous sequence, in the bit sequence do not overlap or partially overlap.

6. The method according to claim 1, wherein determining, from the candidate preamble sequence set, the preamble sequence used during access based on the first sub-bit sequence comprises:

   converting the first sub-bit sequence into a first decimal number; and
   selecting, from the candidate preamble sequence set, a candidate preamble sequence corresponding to the first decimal number as the preamble sequence used during access.

7. The method according to claim 6, wherein selecting, from the candidate preamble sequence set, the candidate preamble sequence corresponding to the first decimal number as the preamble sequence used during access comprises:

selecting, from the candidate preamble sequence set, an $i^{th}$ candidate preamble sequence as the preamble sequence used during access; wherein i is the first decimal number, or i is determined based on the first decimal number and a total number of elements comprised in the candidate preamble sequence set.

8. The method according to claim 6, wherein the resource set comprises at least one of time domain resources or frequency domain resources used for sending the preamble sequence.

9. The method according to claim 8, wherein when each bit in the second sub-bit sequence is associated with one resource in the resource set, determining, from the resource set used for transmitting the preamble sequence, the resource required for sending the preamble sequence used during access based on the second sub-bit sequence comprises:

   determining whether a binary value of each bit in the second sub-bit sequence is a preset value; wherein the preset value is binary data 0 or 1; and
   if the binary value is the preset value, taking the resource associated with the corresponding bit in the resource set as the resource required by the preamble sequence used during access.

10. The method according to claim 8, wherein when a plurality of bit sequences with a same length as the second sub-bit sequence are in one-to-one correspondence to the resources in the resource set, determining, from the resource set used for transmitting the preamble sequence, the resource required for sending the preamble sequence used during access based on the second sub-bit sequence comprises:

   converting the second sub-bit sequence into a second decimal number; and
   selecting, from the resource set, a $j^{th}$ resource as the resource required by the preamble sequence used during access; wherein j is the second decimal number, or j is determined based on the second decimal number and a total number of resources comprised in the resource set.

11. The method according to claim 8, wherein when the resource set comprises a plurality of time-frequency resources used for sending the preamble sequence, determining, from the resource set used for transmitting the preamble sequence, the resource required for sending the preamble sequence of the PUSCH data based on the second sub-bit sequence comprises:

   obtaining, according to a second sequence division rule, a third sub-bit sequence and a fourth sub-bit sequence from the second sub-bit sequence; wherein the second sequence division rule is a rule for dividing the second sub-bit sequence into two portions;
   determining a first time domain resource from a time domain resource set corresponding to the resource set according to the third sub-bit sequence; and determining a first frequency domain resource from a frequency domain resource set corresponding to the resource set according to the fourth sub-bit sequence; and
   taking a time-frequency resource corresponding to the first time domain resource and the first frequency domain resource as the resource required by the preamble sequence used during access.

12. The method according to claim 11, wherein when bits in the third sub-bit sequence are in one-to-one correspondence to time domain resources in the time domain resource set, determining the first time domain resource from the time domain resource set corresponding to the resource set according to the third sub-bit sequence comprises:

   determining whether a binary value of each bit in the third sub-bit sequence is a preset value; wherein the preset value is binary data 0 or 1; and
   if the binary value is the preset value, taking a time domain resource associated with the corresponding bit in the time domain resource set as the first time domain resource.

13. The method according to claim 11, wherein when a plurality of bit sequences with a same length as the third sub-bit sequence are in one-to-one correspondence to time domain resources in the time domain resource set, determining the first time domain resource from the time domain resource set corresponding to the resource set according to the third sub-bit sequence comprises:

   converting the third sub-bit sequence into a third decimal number; and
   selecting, from the time domain resource set, an $x^{th}$ time domain resource as the first time domain resource; wherein x is the third decimal number, or x is determined based on the third decimal number and a total number of time domain resources comprised in the time domain resource set.

14. The method according to claim 12 or 13, wherein when bits in the fourth sub-bit sequence are in one-to-one correspondence to frequency domain resources in the frequency domain resource set, determining the first frequency domain resource from the frequency domain resource set corresponding to the resource set according to the fourth sub-bit sequence comprises:

determining whether a binary value of each bit in the fourth sub-bit sequence is a preset value; wherein the preset value is binary data 0 or 1; and

if the binary value is the preset value, taking a frequency domain resource associated with the corresponding bit in the frequency domain resource set as the first frequency domain resource.

15. The method according to claim 12 or 13, wherein when a plurality of bit sequences with a same length as the fourth sub-bit sequence are in one-to-one correspondence to frequency domain resources in the frequency domain resource set, determining the first frequency domain resource from the frequency domain resource set corresponding to the resource set according to the fourth sub-bit sequence comprises:

converting the fourth sub-bit sequence into a fourth decimal number; and

selecting, from the frequency domain resource set, a $y^{th}$ frequency domain resource as the first frequency domain resource; wherein y is the fourth decimal number, or y is determined based on the fourth decimal number and a total number of frequency domain resources comprised in the frequency domain resource set.

16. A data transmission method, **characterized in that** the method comprises:

receiving a preamble sequence and PUSCH data;

determining a first sub-bit sequence according to index data of the received preamble sequence in a candidate preamble sequence set; and determining a second sub-bit sequence according to position data of a resource carrying the preamble sequence in a resource set;

after it is determined that the preamble sequence is correct, merging the first sub-bit sequence and the second sub-bit sequence into a sequence according to a first sequence division rule to obtain a bit sequence associated with the PUSCH data; wherein the first sequence division rule is a rule for dividing the bit sequence into two portions; and

performing a receiving processing on the PUSCH data by using the bit sequence associated with the PUSCH data, the receiving processing comprising descrambling and/or checking the PUSCH data.

17. The method according to claim 16, wherein determining the first sub-bit sequence according to the index data of the received preamble sequence in the candidate preamble sequence set comprises:

converting the index data of the received preamble sequence in the candidate preamble sequence set into binary data, and taking the binary data as the first sub-bit sequence; wherein the index data of the received preamble sequence in the candidate preamble sequence set is a decimal number; or

determining the first sub-bit sequence according to the index data of the received preamble sequence in the candidate preamble sequence set and a total number of elements comprised in the candidate sequence set.

18. The method according to claim 16, wherein the resource set comprises at least one of time domain resources or frequency domain resources used for sending the preamble sequence.

19. The method according to claim 18, wherein when bits in the second sub-bit sequence are in one-to-one correspondence to the resources in the resource set, determining the second sub-bit sequence according to the position data of the resource carrying the preamble sequence in the resource set comprises:

constructing an initial sequence based on whether each of a plurality of continuous resources carries the preamble sequence; wherein when the preamble sequence is received on the resource, a value of the corresponding bit in the initial sequence is set to a preset value, when the preamble sequence is not received on the resource, the value of the corresponding bit in the initial sequence is set to an inverse value of the preset value, and the preset value is 0 or 1; and

constructing at least one sequence comprising the initial sequence and having a same length as the second sub-bit sequence, and taking the at least one sequence constructed as the second sub-bit sequence.

20. The method according to claim 18, wherein when a plurality of bit sequences with a same length as the second sub-bit sequence are in one-to-one correspondence to the resources in the resource set, determining the second sub-bit sequence according to the position data of the resource carrying the preamble sequence in the resource set comprises:

converting the position data of the resource carrying the preamble sequence in the resource set into binary data, and taking the binary data as the second sub-bit sequence; wherein the position data of the resource carrying the preamble sequence in the resource set is a decimal number; or
determining the second sub-bit sequence according to the position data of the resource carrying the preamble sequence in the resource set and a total number of elements comprised in the resource set.

21. The method according to claim 18, wherein when the resource set comprises a plurality of time-frequency resources used for sending the preamble sequence, determining the second sub-bit sequence according to the position data of the resource carrying the preamble sequence in the resource set comprises:

determining a third sub-bit sequence according to position data of a time domain resource corresponding to a time-frequency resource carrying the preamble sequence in a time domain resource set;
determining a fourth sub-bit sequence according to position data of a frequency domain resource corresponding to a time-frequency resource carrying the preamble sequence in a frequency domain resource set; and
merging the third sub-bit sequence and the fourth sub-bit sequence into the second sub-bit sequence according to a second sequence division rule; wherein the second sequence division rule is a rule for dividing the second sub-bit sequence into two portions.

22. The method according to claim 21, wherein determining the third sub-bit sequence according to the position data of the time domain resource carrying the preamble sequence in the time domain resource set comprises:

converting the position data of the time domain resource carrying the preamble sequence in the time domain resource set into binary data, and taking the binary data as the third sub-bit sequence; wherein the position data of the time domain resource carrying the preamble sequence in the time domain resource set is a decimal number; or
determining the third sub-bit sequence according to the position data of the time domain resource carrying the preamble sequence in the time domain resource set and a total number of elements comprised in the time domain resource set.

23. The method according to claim 21, wherein determining the fourth sub-bit sequence according to the position data of the frequency domain resource carrying the preamble sequence in the frequency domain resource set comprises:

converting the position data of the frequency domain resource carrying the preamble sequence in the frequency domain resource set into binary data, and taking the binary data as the fourth sub-bit sequence; wherein the position data of the frequency domain resource carrying the preamble sequence in the frequency domain resource set is a decimal number; or
determining the fourth sub-bit sequence according to the position data of the frequency domain resource carrying the preamble sequence in the frequency domain resource set and a total number of elements comprised in the frequency domain resource set.

24. A terminal, **characterized by** comprising a memory, a transceiver, and a processor; wherein
the memory is configured to store a computer program; the transceiver is configured to transmit and receive data under the control of the processor; and the processor is configured to read the computer program in the memory and perform the following operations:

determining a bit sequence associated with PUSCH data to be sent; obtaining a first sub-bit sequence and a second sub-bit sequence from the bit sequence according to a first sequence division rule, wherein the first sequence division rule is a rule for dividing the bit sequence into two portions;
determining, from a candidate preamble sequence set, a preamble sequence used during access based on the first sub-bit sequence; determining, from a resource set used for transmitting the preamble sequence, a resource required for sending the preamble sequence used during access based on the second sub-bit sequence;
sending, on the resource required by the preamble sequence used during access, the preamble sequence used during access; and
sending the PUSCH data.

**25.** The terminal according to claim 24, wherein the processor is further configured to:

obtain, from the PUSCH data, at least one sequence of a sequence corresponding to a CRC check bit, a sequence corresponding to a terminal identifier, or a sequence corresponding to a feature bit in the PUSCH data; and

taking the at least one sequence as the bit sequence associated with the PUSCH data.

**26.** The terminal according to claim 25, wherein the feature bit comprises:

first N bits in the PUSCH data;
last N bits in the PUSCH data; or
N bits determined from the PUSCH data according to a preset rule;
wherein N is a positive integer.

**27.** The terminal according to any one of claims 24 to 26, wherein the first sequence division rule comprises:
dividing the bit sequence into two portions, each of is a continuous or discontinuous sequence.

**28.** The terminal according to claim 27, wherein positions of the two portions, each of which is a continuous or discontinuous sequence, in the bit sequence do not overlap or partially overlap.

**29.** The terminal according to claim 24, wherein the processor is further configured to:

convert the first sub-bit sequence into a first decimal number; and
select, from the candidate preamble sequence set, a candidate preamble sequence corresponding to the first decimal number as the preamble sequence used during access.

**30.** The terminal according to claim 29, wherein the processor is further configured to:
select, from the candidate preamble sequence set, an $i^{th}$ candidate preamble sequence as the preamble sequence used during access; wherein i is the first decimal number, or i is determined based on the first decimal number and a total number of elements comprised in the candidate preamble sequence set.

**31.** The terminal according to claim 29, wherein the resource set comprises at least one of time domain resources or frequency domain resources used for sending the preamble sequence.

**32.** The terminal according to claim 31, wherein when each bit in the second sub-bit sequence is associated with one resource in the resource set, the processor is further configured to:

determine whether a binary value of each bit in the second sub-bit sequence is a preset value; wherein the preset value is binary data 0 or 1; and
if the binary value is the preset value, take the resource associated with the corresponding bit in the resource set as the resource required by the preamble sequence used during access.

**33.** The terminal according to claim 31, wherein when a plurality of bit sequences with a same length as the second sub-bit sequence are in one-to-one correspondence to the resources in the resource set, the processor is further configured to:

convert the second sub-bit sequence into a second decimal number; and
select, from the resource set, a $j^{th}$ resource as the resource required by the preamble sequence used during access; wherein j is the second decimal number, or j is determined based on the second decimal number and a total number of resources comprised in the resource set.

**34.** The terminal according to claim 31, wherein when the resource set comprises a plurality of time-frequency resources used for sending the preamble sequence, the processor is further configured to:

obtain, according to a second sequence division rule, a third sub-bit sequence and a fourth sub-bit sequence from the second sub-bit sequence; wherein the second sequence division rule is a rule for dividing the second sub-bit sequence into two portions;
determine a first time domain resource from a time domain resource set corresponding to the resource set according to the third sub-bit sequence; and determine a first frequency domain resource from a frequency domain resource set corresponding to the resource set according to the fourth sub-bit sequence; and take a time-frequency resource corresponding to the first time domain resource and the first frequency domain resource as the resource required by the preamble sequence used during access.

35. The terminal according to claim 34, wherein when bits in the third sub-bit sequence are in one-to-one correspondence to time domain resources in the time domain resource set, the processor is further configured to:

determine whether a binary value of each bit in the third sub-bit sequence is a preset value; wherein the preset value is binary data 0 or 1; and

if the binary value is the preset value, take a time domain resource associated with the corresponding bit in the time domain resource set as the first time domain resource.

36. The terminal according to claim 34, wherein when a plurality of bit sequences with a same length as the third sub-bit sequence are in one-to-one correspondence to time domain resources in the time domain resource set, the processor is further configured to:

convert the third sub-bit sequence into a third decimal number; and

select, from the time domain resource set, an $x^{th}$ time domain resource as the first time domain resource; wherein x is the third decimal number, or x is determined based on the third decimal number and a total number of time domain resources comprised in the time domain resource set.

37. The terminal according to claim 35 or 36, wherein when bits in the fourth sub-bit sequence are in one-to-one correspondence to frequency domain resources in the frequency domain resource set, the processor is further configured to:

determine whether a binary value of each bit in the fourth sub-bit sequence is a preset value; wherein the preset value is binary data 0 or 1; and

if the binary value is the preset value, take a frequency domain resource associated with the corresponding bit in the frequency domain resource set as the first frequency domain resource.

38. The terminal according to claim 35 or 36, wherein when a plurality of bit sequences with a same length as the fourth sub-bit sequence are in one-to-one correspondence to frequency domain resources in the frequency domain resource set, the processor is further configured to:

convert the fourth sub-bit sequence into a fourth decimal number; and

select, from the frequency domain resource set, a $y^{th}$ frequency domain resource as the first frequency domain resource; wherein y is the fourth decimal number, or y is determined based on the fourth decimal number and a total number of frequency domain resources comprised in the frequency domain resource set.

39. A base station, **characterized by** comprising a memory, a transceiver, and a processor; wherein the memory is configured to store a computer program; the transceiver is configured to transmit and receive data under the control of the processor; and the processor is configured to read the computer program in the memory and perform the following operations:

receiving a preamble sequence and PUSCH data;

determining a first sub-bit sequence according to index data of the received preamble sequence in a candidate preamble sequence set; and determining a second sub-bit sequence according to position data of a resource carrying the preamble sequence in a resource set;

after it is determined that the preamble sequence is correct, merging the first sub-bit sequence and the second sub-bit sequence into a sequence according to a first sequence division rule to obtain a bit sequence associated with the PUSCH data; wherein the first sequence division rule is a rule for dividing the bit sequence into two portions; and

performing a receiving processing on the PUSCH data by using the bit sequence associated with the PUSCH data, the receiving processing comprising descrambling and/or checking the PUSCH data.

40. The base station according to claim 39, wherein the processor is further configured to:

convert the index data of the received preamble sequence in the candidate preamble sequence set into binary data, and take the binary data as the first sub-bit sequence; wherein the index data of the received preamble sequence in the candidate preamble sequence set is a decimal number; or

determine the first sub-bit sequence according to the index data of the received preamble sequence in the candidate preamble sequence set and a total number of elements comprised in the candidate sequence set.

41. The base station according to claim 39, wherein the resource set comprises at least one of time domain resources or frequency domain resources used for sending the preamble sequence.

42. The base station according to claim 41, wherein when bits in the second sub-bit sequence are in one-to-one correspondence to the resources in the resource set, the processor is further configured to:

construct an initial sequence based on whether each of a plurality of continuous resources carries the preamble sequence; wherein when the preamble sequence is received on the resource, a value of the corresponding bit in the initial sequence is set to a preset value, when the preamble sequence is not received on the resource, the value of the corresponding bit in the initial sequence is set to an inverse value of the preset value, and the preset value is 0 or 1; and

construct at least one sequence comprising the initial sequence and having a same length as the second sub-bit sequence, and take the at least one sequence constructed as the second sub-bit sequence.

43. The base station according to claim 41, wherein when a plurality of bit sequences with a same length as the second sub-bit sequence are in one-to-one correspondence to the resources in the resource set, the processor is further configured to:

convert the position data of the resource carrying the preamble sequence in the resource set into binary data, and take the binary data as the second sub-bit sequence; wherein the position data of the resource carrying the preamble sequence in the resource set is a decimal number; or

determine the second sub-bit sequence according to the position data of the resource carrying the preamble sequence in the resource set and a total number of elements comprised in the resource set.

44. The base station according to claim 41, wherein when the resource set comprises a plurality of time-frequency resources used for sending the preamble sequence, the processor is further configured to:

determine a third sub-bit sequence according to position data of a time domain resource corresponding to a time-frequency resource carrying the preamble sequence in a time domain resource set;

determine a fourth sub-bit sequence according to position data of a frequency domain resource corresponding to a time-frequency resource carrying the preamble sequence in a frequency domain resource set; and

merge the third sub-bit sequence and the fourth sub-bit sequence into the second sub-bit sequence according to a second sequence division rule; wherein the second sequence division rule is a rule for dividing the second sub-bit sequence into two portions.

45. The base station according to claim 44, wherein the processor is further configured to:

convert the position data of the time domain resource carrying the preamble sequence in the time domain resource set into binary data, and take the binary data as the third sub-bit sequence; wherein the position data of the time domain resource carrying the preamble sequence in the time domain resource set is a decimal number; or

determine the third sub-bit sequence according to the position data of the time domain resource carrying the preamble sequence in the time domain resource set and a total number of elements comprised in the time domain resource set.

46. The base station according to claim 44, wherein the processor is further configured to:

convert the position data of the frequency domain resource carrying the preamble sequence in the frequency domain resource set into binary data, and take the binary data as the fourth sub-bit sequence; wherein the position data of the frequency domain resource carrying the preamble sequence in the frequency domain resource set is a decimal number; or

determine the fourth sub-bit sequence according to the position data of the frequency domain resource carrying the preamble sequence in the frequency domain resource set and a total number of elements comprised in the frequency domain resource set.

47. A terminal, **characterized by** comprising:

a division unit configured to determine a bit sequence associated with PUSCH data to be sent; and obtain a first sub-bit sequence and a second sub-bit sequence from the bit sequence according to a first sequence division rule, wherein the first sequence division rule is a rule for dividing the bit sequence into two portions;
a determination unit configured to, determine, from a candidate preamble sequence set, a preamble sequence used during access based on the first sub-bit sequence; and determine, from a resource set used for transmitting the preamble sequence, a resource required for sending the preamble sequence used during access based on the second sub-bit sequence;
a first sending unit configured to send, on the resource required by the preamble sequence used during access, the preamble sequence used during access; and
a second sending unit configured to send the PUSCH data.

48. A base station, **characterized by** comprising:

a receiving unit configured to receive a preamble sequence and PUSCH data;
a determination unit configured to determine a first sub-bit sequence according to index data of the received preamble sequence in a candidate preamble sequence set; and determine a second sub-bit sequence according to position data of a resource carrying the preamble sequence in a resource set;
a merging unit configured to, after it is determined that the preamble sequence is correct, merge the first sub-bit sequence and the second sub-bit sequence into a sequence according to a first sequence division rule to obtain a bit sequence associated with the PUSCH data; the first sequence division rule being a rule for dividing the bit sequence into two portions; and
a processing unit configured to perform a receiving processing on the PUSCH data by using the bit sequence associated with the PUSCH data, the receiving processing comprising descrambling and/or checking the PUSCH data.

49. A processor-readable storage medium, **characterized in that** the processor-readable storage medium stores a computer program, the computer program being configured for causing the processor to perform the method according to any one of claims 1 to 23.

FIG. 1

FIG. 2

FIG. 3

| | | |
|---|---|---|
| Determining a bit sequence associated with PUSCH data to be sent; and obtaining a first sub-bit sequence and a second sub-bit sequence from the bit sequence according to a first sequence division rule; where the first sequence division rule is a rule for dividing the bit sequence into two portions | | 401 |

Determining, from a candidate preamble sequence set, a preamble sequence used during access based on the first sub-bit sequence; and determining, from a resource set used for transmitting the preamble sequence, a resource required for sending the preamble sequence used during access based on the second sub-bit sequence — 402

Sending, on the resource required by the preamble sequence used during access, the preamble sequence used during access — 403

Sending the PUSCH data — 404

FIG. 4

| 0 | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| 1 | 1 | 1 | 0 | 0 | 1 | 0 | 1 | 1 | 0 | 0  | 0  | 0  | 1  | 1  | 0  |

Divide into two continuous sequences

| 0 | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| 1 | 1 | 1 | 0 | 0 | 1 | 0 | 1 | 1 | 0 | 0  | 0  | 0  | 1  | 1  | 0  |

① First sub-bit sequence (11100101)     Second sub-bit sequence (10000110)

② First sub-bit sequence (1110010)     Second sub-bit sequence (110000110)

③ First sub-bit sequence (111001011)     Second sub-bit sequence (110000110)

④ First sub-bit sequence (1110010110)     Second sub-bit sequence (110000110)

FIG. 5

EP 4 529 313 A1

| 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| 1 | 1 | 1 | 0 | 0 | 1 | 0 | 1 | 1 | 0 | 0 | 0 | 0 | 1 | 1 | 0 |

First sub-bit sequence

Second sub-bit sequence

Divide into two discontinuous sequences

① 
First sub-bit sequence
（10110010）
Second sub-bit sequence
（11001001）

② 
First sub-bit sequence
（1001110010）
Second sub-bit sequence
（110001）

③ 
First sub-bit sequence
（101110010）
Overlap  Overlap
Second sub-bit sequence
（110011001）

④ 
First sub-bit sequence
（1001110010）
Overlap
Second sub-bit sequence
（1101001）

FIG. 6

Time domain resource of preamble sequence

A)Time domain resources of a plurality of preamble sequences are continuous

Time domain source set    Time domain source set

Time domain

B)Time domain resources of a plurality of preamble sequences are discontinuous

Time domain source set    Time domain source set

Time domain

FIG. 7

Frequency domain resource of preamble sequence

A)Frequency domain resources of a plurality of preamble sequences are continuous

Frequency domain
resource set

Frequency domain
resource set

Frequency domain

B)Frequency domain resources of a plurality of preamble sequences are discontinuous

Frequency domain
resource set

Frequency domain
resource set

Frequency domain

FIG. 8

A plurality of discontinuous REs constitute a time-frequency resource set

| RE$_{15}$ | RE$_{25}$ | RE$_{35}$ | RE$_{45}$ | RE$_{55}$ |
| RE$_{15}$ | RE$_{24}$ | RE$_{34}$ | RE$_{44}$ | RE$_{54}$ |
| RE$_{13}$ | RE$_{23}$ | RE$_{33}$ | RE$_{43}$ | RE$_{53}$ |
| RE$_{12}$ | RE$_{22}$ | RE$_{32}$ | RE$_{42}$ | RE$_{52}$ |
| RE$_{11}$ | RE$_{22}$ | RE$_{31}$ | RE$_{41}$ | RE$_{51}$ |

Frequency domain

Time domain

$$\left\{ \begin{array}{l} RE_{11}、\ RE_{22}、\ RE_{34}、 \\ RE_{43}、\ RE_{51}、\ RE_{53} \end{array} \right\}$$

A plurality of continuous REs constitute a time-frequency resource set

$$\left\{ \begin{array}{l} RE_{11}、\ RE_{22}、\ RE_{31}、 \\ RE_{12}、\ RE_{22}、\ RE_{32}、 \\ RE_{13}、\ RE_{23}、\ RE_{33} \end{array} \right\}$$

FIG. 9

Frequency domain resource

| P | RE$_{1P}$ | RE$_{2P}$ | RE$_{3P}$ | RE$_{4P}$ | ... | RE$_{QP}$ |
| ⋮ | ... | ... | ... | ... | ... | ... |
| 3 | RE$_{13}$ | RE$_{23}$ | RE$_{33}$ | RE$_{43}$ | ... | RE$_{Q3}$ |
| 2 | RE$_{12}$ | RE$_{22}$ | RE$_{32}$ | RE$_{42}$ | ... | RE$_{Q2}$ |
| 1 | RE$_{11}$ | RE$_{21}$ | RE$_{31}$ | RE$_{41}$ | ... | RE$_{Q1}$ |
| | 1 | 2 | 3 | 4 | ... | Q |

Time domain source

FIG. 10

```
                                                    ┌─ 1101
┌──────────────────────────────────────────┐
│   Receiving a preamble sequence and PUSCH data │
└──────────────────────────────────────────┘
                      │
                      ▼
┌──────────────────────────────────────────┐
│ Determining a first sub-bit sequence according to index │     1102
│  data of the received preamble sequence in a candidate  │
│  preamble sequence set; and determining a second sub-   │
│   bit sequence according to position data of a resource │
│      carrying the preamble sequence in a resource set   │
└──────────────────────────────────────────┘
                      │
                      ▼
┌──────────────────────────────────────────┐
│  After it is determined that the preamble sequence is   │
│    correct, merging the first sub-bit sequence and the  │
│  second sub-bit sequence into a sequence based on a first│   1103
│     sequence division rule to obtain a bit sequence     │
│      associated with the PUSCH data; wherein the first  │
│      sequence division rule is a rule for dividing the bit│
│              sequence into two portions                 │
└──────────────────────────────────────────┘
                      │
                      ▼
┌──────────────────────────────────────────┐
│  Performing a receiving processing on the PUSCH data    │   1104
│   by using the bit sequence associated with the PUSCH   │
│     data, wherein the receiving processing includes     │
│     descrambling and/or checking the PUSCH data         │
└──────────────────────────────────────────┘
```

FIG. 11

First sub-bit sequence          Second sub-bit sequence

| 0 | 0 | 1 | 0 | 0 | 0 | 1 | 1 |   | 1 | 1 | 0 | 1 | 1 | 0 | 0 | 1 |

Merge

| 0 | 0 | 1 | 0 | 0 | 0 | 1 | 1 | 1 | 1 | 0 | 1 | 1 | 0 | 0 | 1 |

First sub-bit sequence          Second sub-bit sequence

Bit sequence associated
with the PUSCH data

FIG. 12

FIG. 13

FIG. 14

FIG. 15

1601

1602

1604

| Receiving unit | Determination unit | Processing unit |
|---|---|---|

| Merging unit |
|---|

1603

FIG. 16

## INTERNATIONAL SEARCH REPORT

International application No.

**PCT/CN2023/092354**

### A. CLASSIFICATION OF SUBJECT MATTER

H04W72/04(2023.01)i; H04W74/08(2009.01)i

According to International Patent Classification (IPC) or to both national classification and IPC

### B. FIELDS SEARCHED

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

3GPP, CNTXT, DWPI, ENTXTC: 比特序列, 划分, 前导码, 前导码序列, 物理上行共享信道, 物理随机接入信道, bit sequence, divide, preamble, PRACH, PUSCH, sub, sequence

### C. DOCUMENTS CONSIDERED TO BE RELEVANT

| Category* | Citation of document, with indication, where appropriate, of the relevant passages | Relevant to claim No. |
|---|---|---|
| A | CN 111586882 A (HUAWEI TECHNOLOGIES CO., LTD.) 25 August 2020 (2020-08-25) description, paragraphs [0092]-[0101], and figures 7-12 | 1-49 |
| A | US 2022086915 A1 (IDAC HOLDINGS, INC.) 17 March 2022 (2022-03-17) entire document | 1-49 |
| A | US 2021120592 A1 (SHARP KABUSHIKI KAISHA et al.) 22 April 2021 (2021-04-22) entire document | 1-49 |
| A | WO 2022011589 A1 (ZTE CORP.) 20 January 2022 (2022-01-20) entire document | 1-49 |
| A | QUALCOMM INCORPORATED. "Channel Structure for Two-Step RACH" *3GPP TSG-RAN WG1 Meeting #97 R1-1907691*, 17 May 2019 (2019-05-17), entire document | 1-49 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 July 2023** | **21 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/092354**

| Patent document cited in search report | | | Publication date (day/month/year) | Patent family member(s) | | | Publication date (day/month/year) |
|---|---|---|---|---|---|---|---|
| CN | 111586882 | A | 25 August 2020 | WO | 2020164616 | A1 | 20 August 2022 |
| | | | | KR | 20210126725 | A | 20 October 2021 |
| | | | | US | 2021378030 | A1 | 02 December 2021 |
| | | | | EP | 3923669 | A1 | 15 December 2021 |
| US | 2022086915 | A1 | 17 March 2022 | KR | 20210134625 | A | 10 November 2021 |
| | | | | CA | 3130285 | A1 | 20 August 2020 |
| | | | | WO | 2020167794 | A1 | 20 August 2020 |
| | | | | SG | 11202108802 | WA | 29 September 2021 |
| | | | | EP | 3925370 | A1 | 22 December 2021 |
| | | | | CN | 113728715 | A | 30 November 2021 |
| US | 2021120592 | A1 | 22 April 2021 | WO | 2019216341 | A1 | 14 November 2019 |
| | | | | KR | 20210006442 | A | 18 January 2021 |
| | | | | JP | 2019198015 | A | 14 November 2019 |
| | | | | EP | 3793310 | A1 | 17 March 2021 |
| | | | | CN | 112106436 | A | 18 December 2020 |
| WO | 2022011589 | A1 | 20 January 2022 | JP | 2023509427 | A | 08 March 2023 |
| | | | | EP | 4070580 | A1 | 12 October 2022 |
| | | | | US | 2022286225 | A1 | 08 September 2022 |
| | | | | KR | 20220100652 | A | 15 July 2022 |

Form PCT/ISA/210 (patent family annex) (July 2022)

**EP 4 529 313 A1**

**Patent documents cited in the description**

• CN 202210554119